# EUROPÄISCHE PATENTSCHRIFT

(11) **EP 0 864 457 B1**
(45) Veröffentlichungstag und Bekanntmachung des Hinweises auf die Patenterteilung: **04.06.2003**
(21) Anmeldenummer: 98103909.2
(22) Anmeldetag: 05.03.1998
(51) Int. Cl.: B60K 6/02, B60K 41/28

(54) **Antriebssystem für Nutzfahrzeuge**
Drive system for a utility device
Système propulseur pour véhicules utilitaires

(30) Priorität: 12.03.1997 DE 19710082
(43) Veröffentlichungstag der Anmeldung: 16.09.1998
(73) Patentinhaber: DEERE & COMPANY, Moline, Illinois 61265-8098 (US)
(72) Erfinder: Weiss, Heinz, 64625 Bensheim (DE)
(74) Vertreter: Magin, Ludwig Bernhard

(56) Entgegenhaltungen:
- EP-A- 0 392 411
- WO-A-94/06651
- DE-A- 4 039 005
- US-A- 5 418 437
- US-A- 5 428 532

## Beschreibung

Die Erfindung betrifft ein Antriebssystem für Nutzfahrzeuge, insbesondere für landwirtschaftliche oder industrielle Schlepper, mit einem durch einen Verbrennungsmotor angetriebenen Generator, mit wenigstens einer Antriebsachse, deren Räder jeweils durch einen zugehörigen, durch den Generator gespeisten Elektromotor angetrieben werden, mit wenigstens einer Lenkachse, deren Räder gemeinsam oder einzeln durch Lenkaktuatoren gelenkt werden, und mit manuellen Bedienelementen für wenigstens die Fahrfunktionen Lenkung und Geschwindigkeitsvorgabe.

Nutzfahrzeuge und insbesondere landwirtschaftliche Schlepper werden heute von Verbrennungsmotoren und einer Vielzahl von nach Bauart und Gangzahl unterschiedlichen Getrieben angetrieben. Es sind auch Antriebe bekannt, bei denen der Verbrennungsmotor einen Generator antreibt, der Strom für zwei Einzelrad-Elektromotoren einer Fahrzeugantriebsachse bereitstellt (US-A-4,953,646). Anstelle eines derartigen reinen elektrischen Antriebs wurde durch die ältere Patentanmeldung P 196 23 738.6 ein Fahrzeug mit leistungsverzweigten elektromechanischen Einzelradantrieben vorgeschlagen, bei dem die hier vorliegende Erfindung grundsätzlich auch Anwendung finden kann.

Zur Bereitstellung der Fahrfunktionen werden manuelle Bedienelemente eingesetzt, welche die hochprioren-Lenkrad- und Bremspedal-Betätigungen unmittelbar mechanisch und/oder hydraulisch umsetzen, d. h. zwischen dem Lenkrad und der Lenkeinrichtung sowie zwischen dem Bremspedal und den Bremsen besteht eine mechanische oder mechanisch-hydraulische Verbindung. Bisher ist dies aus Sicherheitsgründen grundsätzlich für alle Nutzfahrzeuge gesetzlich vorgeschrieben. Bei Ackerschleppern, die nur bis 40 km/h zugelassen sind, ist es ausnahmsweise auch zulässig, die hochprioren Lenkeinrichtungen und Bremsen servo-hydraulisch zu bedienen. Eine Reihe von hiederprioren Fahrfunktionen (beispielsweise die Geschwindigkeitsvorgabe) werden in der Regel ebenso direkt vorgegeben. Jedoch wurde durch die EP-A-0 698 518 auch vorgeschlagen, die Vorgabe niederpriorer Fahrfunktionen elektronisch, insbesondere über eine Bedieneroberfläche (User-Interface), indirekt vorzugegeben.

Die DE-A-40 39 006 beschreibt ein Steuersystem für ein Fahrzeug, welches konventionel durch eine Brennkraftmaschine, der ein Getriebe nachgeordnet ist, angetrieben wird. Es ist eine zentrale Steuereinheit vorgesehen, die an eine erste Sensoranordnung zur Erfassung der Umgebungsbedingungen und eine zweite Sensoranordnung zur Erfassung der Bedienungshandlungen angeschlossen sind. Die zentrale Steuereinrichtung steht einerseits mit einer Sub-Hauptantriebssteuerung, die mit einer Maschinensteuereinrichtung und mit einer Getriebesteuereinrichtung verbunden ist und diese gemeinsam steuert, und andererseits mit einer Sub-Hauptfahrsteuerung, die mit einer Lenksteuereinrichtung, mit einer Radaufhängungssteuereinrichtung und mit einer Bremssteuereinrichtung verbunden ist und diese gemeinsam steuert, in Verbindung. Der Datenaustausch zwischen der zentralen Steuereinheit und den beiden Sub-Steuerungen erfolgt über einen Echtzeitbus, während der Datenaustausch zwischen den Sub-Steuerungen und den zugehörigen Steuereinrichtungen über schnelle Übertragungsleitungen erfolgt. Dies soll es ermöglichen, das Antriebssystem, welches niederpriore Signale verarbeitet, und das Fahrsystem, welches hochpriore Signale verarbeitet, unabhängig voneinander zu betreiben.

Das Dokument US - A - 5,418,437 beschreibt ein Antriebssystem für Nutzfahrzeuge, mit einem durch einen Verbrennungsmotor angetriebenen Generator, mit einer Antriebsachse, deren Räder jeweils durch einen zugehörigen, durch den Generator gespeisten Elektromotor angetrieben werden, mit einer Lenkachse, deren Räder gemeinsam oder einzeln durch Lenkaktuatoren gelenkt werden, und mit manuellen Bedienelementen für wenigstens die Fahrfunktionen Lenkung und Geschwindigkeitsvorgabe, wobei ein Hauptkontroller vorgesehen ist, der mit Hilfskontrollern in Verbindung steht, die gemeinsam die Signale der Bedienelemente, wie die Signale eines Lenkbedienelements, einer Geschwindigkeitsvorgabe etc. verarbeiten und das Fahrzeug steuern.

Durch die Bereitstellung zusätzlicher Funktionen, durch die die Manövrierfähigkeit des Fahrzeugs im Arbeitseinsatz oder die Lenkfähigkeit und Sicherheit bei Straßenfahrt verbessert werden sollen, wird das Antriebskonzept des Arbeitsfahrzeugs immer komplexer.

Ziel der Erfindung ist es, die Bedienung aller Fahrfunktionen zu überdenken und nach Möglichkeit einheitlich neu zu organisieren. Dabei ist es anzustreben, bei Fahrzeugen mit Generator und elektrischen Einzelradmotoren, bei denen beispielsweise alle vier Quadranten des Antriebssystems zum Vorwärts- und Rückwärtsfahren sowie zum Bremsen genutzt werden können, die Funktionen Lenken, Antreiben und gegebenenfalls auch Bremsen gemeinsam abzuwickeln.

Möglich erscheint es, die Funktion der Geschwindigkeitsregelung in elektrische Einzelradantriebe zu verlagern. Dann können das Getriebe als mechanische Einheit sowie die Achs-Funktionen mit Achsdifferential, Differentialsperre, etc. ebenso wie das eventuell vorhandene Zentraldifferential mit Zentral-differential-Sperre und im Retarderbereich auch die Bremsfunktionen eingespart bzw. geschont werden. Hierdurch entfielen eine Vielzahl kostspieliger Teile und die Fahrfunktionen ließen sich einheitlich darstellen. Die Einbeziehung weiterer Fahrzeugfunktionen in die Steuerung erscheint außerordentlich wünschenswert. Bei der Einbeziehung hochpriorer Lenkrad- und Bremspedal-Betätigungen sind jedoch hohe Sicherheitsanforderungen zu erfüllen, die zur Zeit einer solchen Einbeziehung noch im Wege stehen.

Die der Erfindung zugrunde liegende Aufgabe wird darin gesehen, ein Antriebssystem der eingangs genannten Art vorzuschlagen, dem ein einfaches und effizientes Antriebskonzept für die elektrische bzw. elektronische Steuerung des Fahrzeugs zugrunde liegt. Es soll die Einbeziehung hochpriorer Bedienungselemente in die Steuerung unter Einsatz moderner Technik ermöglicht werden, wobei wenigstens gleich hohe Sicherheitsanforderungen erfüllt werden, wie sie den heute vorherrschenden gesetzlichen Vorschriften zugrunde liegen. Ferner soll der Nachweis erbracht werden, daß das erfindungsgemäß einfache, effiziente Antriebskonzept so sicher ist wie die heutige Praxis.

Die Aufgabe wird erfindungsgemäß durch die Lehre des Patentanspruchs 1 gelöst. Weitere vorteilhafte Ausgestaltungen und Weiterbildungen gehen aus den Unteransprüchen hervor.

Durch die erfindungsgemäße Lösung lassen sich die Fahrstrategien auf einfache Weise automatisieren, so daß die Bedienungsperson entlastet wird. Durch die Verwendung elektronischer Komponenten kann der Aufwand zur Realisierung des Antriebssystems äußerst gering gehalten werden. Die Automatisierung ist vorteilhaft, da die Bedienungsperson nur ein begrenztes Wahrnehmungsvermogen hinsichtlich der Straßenund Wetterbedingungen aufbringt und daher in der Regel langsamer reagiert als dies eine elektronische Steuerung vermag. Das erfindungsgemäße Antriebskonzept läßt es auch zu, daß die Fahrzeugreaktionen für die Bedienungsperson vorhersehbar bleiben, d. h. daß das Arbeitsfahrzeug sein Verhalten während der Fahrt nicht unerwartet ändert. Ferner kann ein eindeutiger Zusammenhang zwischen der Lenkradstellung und dem Lenkeinschlag an den Rädern gewährleistet werden. Durch die Einbeziehung hochpriorer Funktionen in die Steuerung können die Sicherheitsanforderungen erfüllt und sogar übertroffen werden.

Die Erfindung ermöglicht die Verwendung einfacher, sensorisierter manueller Bedienelemente, die sich den jeweiligen Anforderungen entsprechend leicht in eine ergonomisch optimale Lage zur Bedienungsperson anordnen lassen. Die Einstellung der Bedienelemente läßt sich durch Sensoren elektronisch abtasten. Die Sensorsignale werden ohne Unterschied ob hochprior oder niederprior von einem Prozessrechner aufbereitet und in diesem von parallel und autark arbeitenden, den einzelnen Bedienelementen zugeordneten Funktions-Modulen, beispielsweise Software-Funktions-Modulen, verarbeitet. Dabei tauschen die Einzel-Module ihre Ergebnisse zur Verbesserung des Echtzeitverhaltens des Gesamtsystems rechnerintern miteinander aus, während die Sollwertvorgaben an die zugehörigen Aktuatorsysteme als Botschaften über einen System-Bus abgewickelt werden.

Der gegenseitige Informationsfluß zwischen den einzelnen Funktions-Modulen läuft damit nicht über den System-Bus, sondern erfolgt intern im Prozeßrechner. Dadurch werden Wartezeiten bei einem stark belasteten System-Bus vermieden. Der Informationsfluß kann schneller und mit weniger Konflikten abgewickelt werden. Dies erhöht entscheidend die Systemsicherheit. Durch den schnellen Informationsfluß und die Konfliktarmut des Systems ist es möglich, daß die sogenannten hochprioren Signale ohne Sicherheitsrisiko von dem Prozeßrechner bearbeitet und ausgewertet werden. Es ist daher nicht mehr erforderlich, die hochprioren Signale bevorzugt vor niederprioren Signalen zu bearbeiten.

Die Definition sogenannter hochpriorer Signale und eine bevorzugte Bearbeitung dieser Signale gegenüber sogenannten niederprioren Signalen ist bei Anwendung der erfindungsgemäßen Lösung nicht mehr erforderlich. Damit ist zur Erfüllung eines hohen Sicherheitsstandards die bisher übliche mechanische oder hydraulische Unmittelbarkeit zwischen einem Bedienelement (z. B. Lenkrad) und dem zugehörigen Aktuatorsystem (z. B. Lenkaktuator oder Lenkgestänge) nicht mehr notwendig.

Auf den System-Bus werden mit einer regelmäßigen Taktfrequenz Botschaften ausgegeben, die Informationen enthalten, welche bis zum Zeitpunkt der Abgabe einer Botschaft durch das jeweilige Funktions-Modul aufbereitet wurden. Die zu diesem Zeitpunkt noch nicht endgültig verarbeiteten Informationen eines Funktions-Moduls werden für eine spätere Botschaft bereitgestellt.

Die Botschaften gehen als Rundschreiben an die Kontroller aller zugehörigen Aktuatorsysteme, wie Elektromotoren, Lenkaktuatoren, Bremsen und dergleichen, um diese anzusteuern. Jeder an den System-Bus angeschlossene Kontroller liest grundsätzlich alle Botschaften und erkennt, welche Teile der Botschaft für ihn bestimmt sind und wertet diese aus. Bei einem Signalausfall arbeitet der Kontroller mit den vorher erhaltenen Informationen weiter.

Ein erhebliches Einsparungspotential kann durch eine bevorzugte Ausgestaltung der Erfindung erschlossen werden, bei der neben niederprioren Vorgaben, beispielsweise die Geschwindigkeitsvorgabe, auch die hochprioren Funktionen Lenken und Bremsen in das Antriebssystem einbezogen werden, indem jeder dieser Funktionen wenigstens ein eigenes, parallel und autark arbeitendes Funktions-Modul zugeordnet wird. Die Funktions-Module ermitteln einerseits Sollwertvorgaben, die in Form von Botschaften über den System-Bus an die Kontroller (Elektromotor-Kontroller, Lenk-Kontroller und Brems-Kontroller) der zugehörigen Aktuatorsystem ausgegeben werden. Sie tauschen andererseits prozessorintern Informationen untereinander (prozessorinterner Datenaustausch) aus.

Mit zunehmendem Lenkeinschlag laufen die Vorder- und Hinterräder auf unterschiedlich großen Radien. Dies macht einen Drehzahlausgleich erforderlich, denn wird der Drehmomentenausgleich behindert, ergeben sich hohe Radumfangskräfte, die den Antriebsstrang verspannen. Dieses Problem wird beispielsweise in der EP-A-0 553 670 näher erläutert. Einer bevorzugten Ausgestaltung der vorliegenden Erfindung zufolge enthält das Lenk-Modul daher einen Lenkkennfeldspeicher. Durch das Lenk-Modul werden aus den Signalen eines Lenkbedienelements die jeweiligen Ackermannwinkel bestimmt und unter Rückgriff auf den Lenkwinkel-Kennfeldspeicher Korrekturdaten (z. B. Drehzahl-Korrekturwerte) für jedes Rad mit dem Ziel ermittelt, für alle Lenkwinkel ein gleichmäßiges, verspannungsfreies Antreiben und Abbremsen der Räder zu ermöglichen. Die von dem Lenk-Modul ermittelten Korrekturdaten werden prozessorintern wenigstens einem weiteren Funktions-Modul, vorzugsweise einem Getriebe-Modul oder einem Brems-Modul, zugeleitet. Das weitere Funktionsmodul nimmt entsprechende Korrekturen an den von ihm bearbeiteten Sollwertvorgaben vor und übermittelt die korrigierten Sollwertvorgaben in Botschaften über den System-Bus an die Einzelradantriebs-Kontroller.

Die Lenkwinkelstellsignale werden vorrangig vom Lenkbedienelement, z. B. einem Lenkrad, Lenkhebel oder Joystick vorgegeben. Sie können gemäß einer vorteilhaften Ausgestaltung der Erfindung aber auch von automatischen Lenk-Leitsystemen direkt bereitgestellt oder auch indirekt als Lenk-Sequenzen aus einem Sequenz-Speicher ausgelesen werden. Die Sequenzen können hierbei während eines vorausgehenden Arbeitsgangs gespeichert oder auch z. B. als Schichtlinienmodell des zu bearbeitenden Geländes an einem Terminal von der Bedienungsperson vorgeplant werden. Die Betriebsmodi Lenk-Leitsysteme und Lenk-Sequenzen lassen sich durch Eingaben der Bedienungsperson am Terminal, welches über ein eigenes autark arbeitendes Funktions-Modul mit dem Prozeßrechner in Verbindung stehen kann, zuschalten und nach einer automatischen Abschaltung infolge eines Lenkeingriffs der Bedienungsperson reaktivieren. Die unmittelbare Lenkwinkelvorgabe der Bedienungsperson hat aus Sicherheitsgründen immer Priorität gegenüber Lenk-Leitsystemen oder Lenk-Sequenzen.

Die aktuelle Istgeschwindigkeit des Fahrzeugs kann, wie auch andere Meßdaten des Fahrzeugs, auf dem System-Bus zur Verfügung gestellt werden und ist von Bedeutung, da die Lenkung zweckmäßigerweise hinsichtlich Sicherheit und Fahrkomfort bei verschiedenen Betriebsanwendungen, z. B. Fronladerarbeiten oder Straßenfahrt, variabel einstellbar sein sollte, was das Lenkübersetzungsverhältnis, die Dämpfung- und das Ansprechverhalten, etc. angeht. Einfluß auf die Lenkung haben ferner die Fahrzeuggeometrie (Spurbreite, Radstand, Sturz, Lenkkinematik, Lenkfehler, Bereifung, etc.), die Art der gewählten Lenkung (Zweirad-, Vierrad-, Gleichlauflenkung) und dergleichen. Für die Berücksichtigung einer Vielzahl solcher Betriebsanwendungen und Einflußgrößen, die sich beispielsweise über ein virtuelles Terminal einstellen lassen, können besonders wirkungsvoll Mittel der heutigen Elektronik eingesetzt werden.

Es ist von besonderem Vorteil, wenn aus den durch das Lenkrad vorgegebenen Lenkwinkelstellsignalen Sollwertvorgaben für die Lenkung bereitgestellt werden, die von der jeweiligen Fahrzeuggeschwindigkeit abhängen. Dies kann dadurch erfolgen, daß die Lenkwinkelvorgaben hinsichtlich der Fahrzeugistgeschwindigkeit nach vorbestimmten Schranken klassifiziert werden, um aus Kennfeldern gespeicherte Werte von Lenkwinkel-Sollwertvorgaben für eine gelenkte Vorderachse und/oder eine gelenkte Hinterachse nach Richtung (links/rechts) und Betrag zu ermitteln. Die Klassifizierungsparameter können in einem Kennfeldspeicher des Lenk-Moduls abgelegt werden. Überschreitet beispielsweise die Fahrzeugistgeschwindigkeit einen bestimmten Wert, so wird dem Lenkwinkelstellsignal eine Lenkwinkel-Sollwertvorgabe zugeordnet, durch die der Lenkaktuator einen etwas kleineren Lenkwinkel einstellt, als er es bei geringeren Geschwindigkeiten getan hätte. Die ermittelten Lenkwinkel-Sollwertvorgaben werden über den System-Bus ausgegeben und von dem Lenk-Kontroller erkannt. Die gleichen Lenkwinkel-Sollwertvorgabeinformationen können zweckmäßigerweise auch prozessorintern direkt anderen Funktions-Modulen, insbesondere dem Getriebe- und/oder dem Brems-Modul, zur Verfügung gestellt werden, um die Lenkwinkel-Sollwertvorgaben bei deren Signalverarbeitung zu berücksichtigen.

Vorzugsweise wird eine niederpriore Geschwindigkeitsvorgabe in das erfindungsgemäße Antriebssystem einbezogen, indem die elektrischen Signale eines von einer Bedienungsperson betätigbaren Getriebestellers von einem autark arbeitenden Getriebe-Modul aufbereitet werden. Als Getriebesteller kommt z. B. ein Einstellhebel in Betracht, durch den die Bedienungsperson eine Fahrzeugwunschgeschwindigkeit einstellt. Das Getriebe-Modul errechnet Drehzahlwerte für die einzelnen Elektromotoren und gibt diese als in Botschaften verschlüsselte Sollwertvorgaben über den System-Bus an die Einzelradantriebs-Kontroller, insbesondere die Elektromotor-Kontroller, aus. Ferner übermittelt das Getriebe-Modul prozessorintern Korrekturdaten an wenigstens ein weiteres autark arbeitendes Funktions-Modul. Es ist beispielsweise von Vorteil, wenn ein Getriebe-Modul die berechneten nächsten Sollgeschwindigkeiten an ein Lenk-Modul und ein Verbrennungsmotor-Modul intern weitermeldet. Damit werden die Rechenergebnisse eines Getriebe-Moduls nicht nur für die Ansteuerung der Elektromotor-Kontroller genutzt. Vielmehr werden seine Ergebnisse prozessorintern auch zur Korrektur der Ergebnisse eines Lenk-Moduls und/oder eines Verbrennungsmotor-Moduls und gegebenenfalls weiterer Funktions-Module bereitgestellt.

Das Getriebe-Modul enthält zweckmäßigerweise einen über ein Terminal programmierbaren Geschwindigkeits-Kennfeldspeicher, anhand dessen die Drehzahlwerte für die einzelnen Elektromotoren modifizierbar sind, um beispielsweise die Fahrzeuggeschwindigkeit zu begrenzen und/oder unterschiedliche Fahrzeugstrategien (beispielsweise Auswahl von Geschwindigkeitsfeldern für spezielle Anwendungsfälle) einzustellen.

Aus Konventionsgründen wurde die Bezeichnung "Getriebe-Modul" gewählt, obwohl dieses Modul vorrangig Steuerdaten für die Einzelradantriebe, insbesondere die Elektromotoren bereitstellt. Konventionelle Getriebeelemente sind kein notwendiger Bestandteil des erfindungsgemäßen Antriebssystems. Die Erfindung kann jedoch auch bei Antriebssystemen Anwendung finden, die Getriebeelemente, wie Kupplungen, Bremsen oder Gangschaltungen enthalten. In diesem Fall können die über den System-Bus übertragenen Botschaften auch Informationen des Getriebe-Moduls enthalten, die für die Getriebeelemente bestimmt sind.

Gemäß einer bevorzugten Ausgestaltung der Erfindung ist ein autark arbeitendes Getriebe-Modul vorgesehen, der aus der von der Bedienungsperson vorgegebenen Wunschgeschwindigkeit und der aktuellen Fahrzeugistgeschwindigkeit Geschwindigkeitssollwerte ermittelt. Diese Geschwindigkeitssollwerte werden zweckmäßigerweise für jedes angetriebene Rad in Abhängigkeit des aktuellen Lenkwinkels korrigiert, um so ein verspannungsfreies Abrollen aller Räder zu ermöglichen. Hierbei werden z. B. die von dem Lenk-Modul aus der Ackermann-Beziehung für jedes Rad gewonnenen Kennwerte mit einem gewünschten Geschwindigkeitssollwert multipliziert, um Sollwertvorgaben für die Antriebe der Räder zu gewinnen. Das Getriebe-Modul enthält vorzugsweise einen Algorithmus, durch den die Geschwindigkeits-Sollwertvorgabe mit einem Zeitverhalten beaufschlagt wird, so daß größere Sprünge in der Sollwertvorgabe vermieden und die Antriebskomponenten nicht überlastet werden.

Vorzugsweise kann über einen Geschwindigkeitshebel eine maximale Fahrzeuggeschwindigkeit eingestellt werden, die das Fahrzeug nicht überschreiten soll. Das Getriebe-Modul ermittelt aus der Wunschgeschwindigkeit Drehzahlsollwerte für die Radantriebe. Erreicht das Fahrzeug die eingestellte Maximalgeschwindigkeit, so reduziert das Getriebe-Modul diese Sollwerte so, daß die vorgegebene Maximalgeschwindigkeit nicht überschritten wird.

Die Kontroller der Radantriebe stellen die von den Radantrieben aufgebrachten Momente entsprechend den Sollwertvorgaben des Getriebe-Moduls ein. In Abhängigkeit von den Verhältnissen am Rad ergeben sich dann Raddrehzahlen. Diese können in vorteilhafter Weise über die Radantriebs-Kontroller und den System-Bus an den Prozeßrechner zurückgemeldet werden. Das Getriebe-Modul überprüft, ob die erreichten Drehzahlen dem Idealzustand entsprechen, der aus der Kenntnis der Fahrzeuggeometrie und des aktuellen Lenkwinkels unter Nutzung der Ackermann-Bedingung berechnet werden kann. Wird festgestellt, daß die Drehzahl eines oder mehrerer Räder nicht diesem Idealzustand entspricht, werden über das Getriebe-Modul die Solldrehzahlwerte der entsprechenden Antriebe korrigiert.

Ein Sensor zur Bestimmung der Fahrzeuggeschwindigkeit kann die Regelung der Raddrehzahlen unterstützen, ist aber nicht zwingend notwendig.

Gemäß einer bevorzugten Ausgestaltung der Erfindung ist jedem Elektromotor ein Elektromotor-Kontroller zugeordnet, der unter Berücksichtigung der am Rad vorherrschenden Last- und Kraftschlußverhältnisse die über den System-Bus übermittelten Solldrehzahlen durch Erhöhung oder Erniedrigung der Raddrehmomente einregelt. Dies ermöglicht die Berücksichtigung von Radschlupf und eine erhöhte Belastung eines Rades (beispielsweise beim Überfahren eines Hindernisses), die erkannt werden und als Feedback an den zugehörigen Elektromotor-Kontroller gehen, der daraufhin die Leistung nachstellt. Gleiches gilt bei abfallender Belastung eines Rades durch schlechte Bodenhaftung (Glatteis) und dergleichen.

Vorzugsweise enthält der Prozeßrechner ein autark arbeitendes Verbrennungsmotor-Modul. Dieses stellt über den System-Bus Sollwertvorgaben für einen Verbrennungsmotor-Kontroller bereit, der die Kraftstoffeinspritzmenge für den Verbrennungsmotor einregelt. Das Verbrennungsmotor-Modul berechnet die Sollwertvorgaben aufgrund von Solldrehzahlen bzw. Sollgeschwindigkeiten der Räder, die von der Bedienungsperson vorgegeben sind und/oder prozessorintern zur Verfügung stehen.

Als Auslegungspunkt für das Antriebssystem dient zunächst die Nennleistung des Verbrennungsmotors. Falls die Einsatzbedingungen nicht die volle Nennleistung des Verbrennungsmotors erfordern, wird in vorteilhafter Weise vom Verbrennungsmotor-Modul die vom Generator geforderte Leistung bei geringerer Drehzahl und höherem Moment des Verbrennungsmotors und somit verbessertem Wirkungsgrad ermittelt. Dazu greift das Verbrennungsmotor-Modul auf in ihm gespeicherte Kennfelder für den Verbrennungsmotor und/oder den Generator zurück. Die Einspritzmengen-Sollwertvorgabe wird im Verbrennungsmotor-Modul aus der Sollgeschwindigkeit, dem Leistungsbedarf des Fahrzeugs und den Kennfeldern so optimiert, daß sich günstige Gesamtwirkungsgrade des Antriebssystems ergeben. Verfahren zur Steuerung eines Antriebsstranges unter den Gesichtspunkten eines günstigen Wirkungsgrades, der Kraftstoffeinsparung und eines günstigen Emissionsverhaltens sind beispielsweise in der EP-A-0 698 518 beschrieben. Elektromotoren sind in der Lage, die Zugkrafthyperbeln von Ackerschleppern direkt abzubilden und die mechanischen Größen Drehmoment und Drehzahl mit den elektrischen Größen Strom und Spannung bzw. mit Frequenzumrichtern direkt einzustellen. Die Drehzahlen und Drehmomente lassen sich sensorlos aus den Strömen und Spannungen bestimmen.

Das erfindungsgemäße Antriebssystem läßt sich in vorteilhafter Weise auch auf elektro-mechanische Antriebe mit Leistungsverzweigung anwenden, wie sie in der älteren Patentanmeldung P 196 23 738, auf die hinsichtlich deren Offenbarung Bezug genommen wird, beschrieben wurden. Da sich hierbei die Leistungsflüsse bis hin zum Rückfluß elektrischer Leistung manipulieren lassen, ist Spielraum für die Ausnutzung der beschriebenen Möglichkeiten zur Optimierung des Gesamtwirkungsgrades gegeben. Diese Optimierung ist Aufgabe des Verbrennungsmotor-Moduls, der somit die Grundeinstellungen von Verbrennungsmotor und Generator vornimmt und verschlüsselt in Botschaften auf den System-Bus gibt.

Solange mechanische Zapfwellen zum Einsatz kommen, ist es zweckmäßig, wenn sich die Verbrennungsmotordrehzahl mit einem Handgas oder dergleichen konstant vorgeben läßt. Das Verbrennungsmotor-Modul berücksichtigt hierbei die Handgaseinstellung und ob der Zapfwellenmodus ein- oder ausgeschaltet ist, was beispielsweise über ein Terminal erfolgen kann. Das Verbrennungsmotor-Modul übermittelt über den System-Bus an den Verbrennungsmotor-Kontroller entsprechende Sollwertvorgaben zur Einstellung einer konstanten Verbrennungsmotordrehzahl.

Um die Bedienungselemente zukünftiger Nutzfahrzeuge und Schlepper zur gegenwärtigen Praxis vergleichbar zu halten, wird gemäß einer bevorzugten Ausgestaltung der Erfindung vorgeschlagen, auf ein Kupplungspedal nicht zu verzichten, auch für den Fall nicht, daß die Steuerung von Schaltfunktionen der Gänge und Gruppen entfallen kann und die Kupplung nur noch zur Unterbrechung des mechanischen Leistungsflusses dient, um z. B. die Zapfwelle freizuarbeiten. Eine Kupplung erhöht die Fahrsicherheit bei Panikmanövern (wenn beispielsweise die Bedienungsperson die Bedienungselemente schnell, unkontrolliert und nicht aufeinander abgestimmt betätigt), bringt Vorteile beim Anlassen des Verbrennungsmotors und gestattet ein Abschleppen des Fahrzeugs.

Eine Kupplung ist insbesondere bei elektro-mechanisch angetriebenen Fahrzeugen zweckmäßig, bei denen der Verbrennungsmotor unmittelbar oder über ein Getriebe wenigstens eine mit der Antriebsachse in Verbindung stehende Antriebswelle antreibt und bei denen jedem Rad der Antriebsachse ein Summengetriebe zugeordnet ist, welches die Ausgangsleistung der Antriebswelle und des zugehörigen Elektromotors kombiniert und an das Rad abgibt. Derartige Antriebe sind in der älteren Patentanmeldung P 196 23 738 näher beschrieben.

Je nach Betätigungshub eines Kupplungsstellers bzw. eines Kupplungspedals kann ein Kupplungs-Modul unterschiedliche Sollwertvorgaben generieren. Es ist von Vorteil wenn das Kupplungs-Modul in einer ersten Betätigungsphase des Kupplungspedals, wenn dieses beispielsweise nur teilweise niedergedrückt ist, noch keine Information zum Öffnen der Kupplung generiert, sondern an ein Getriebe-Modul den Auftrag gibt, gespeicherte Geschwindigkeitssignale entsprechend eines auslaufenden Fahrzeugs zu generieren und über den System-Bus an die Antriebsteuerungen zu geben.

Vorzugsweise übermittelt das Kupplungs-Modul erst in einer zweiten Betätigungsphase des Kupplungspedals, wenn dieses beispielsweise voll durchgetreten wird, über den Systembus Informationen an den Kupplungs-Kontroller, um die Kupplung zu öffnen und den Leistungsfluß des mechanischen Antriebsstrangs zu unterbrechen. Gegebenenfalls kann das Kupplungs-Modul gleichzeitig prozessorintern an den Getriebe-Kontroller Informationen übermitteln, um diesen zu beauftragen, die Kupplung so synchron mitführen, d. h. die Drehzahlen beidseits der Kupplung aufeinander abzustimmen, daß die Kupplung jederzeit wieder geschlossen werden kann, ohne daß eine Überbelastung der Kupplung auftritt.

Während Frontladerarbeiten treten beim Beschleunigen und Bremsen großer Massen hohe Getriebemomente auf. Da besonders die Bremsfähigkeit des Verbrennungsmotors nicht ausreicht, diese Momente abzufangen, wird für Wendemanöver dieser Art eine Wendekupplung vorgesehen, welche die hohen Momente am Fahrzeugchassis abstützen kann. Die Wendekupplung kann auf übliche Weise zwei Kupplungen bzw. eine Kupplung und eine Bremse umfassen, durch die sich Getriebewellen bzw. Getriebezahnräder miteinander verbinden bzw. gegenüber dem Getriebegehäuse abstützen lassen.

Für die Durchführung von Reversiermanövern sind eine Reihe von Bearbeitungssequenzen erforderlich. Diese sind vorzugsweise in dem Prozeßrechner gespeichert und werden von einem Reversier-Modul in Abhängigkeit davon, ob sich der Reversiersteller in Vorwärts-, Neutral- oder Rückwärtsstellung befindet ausgewertet. Das Reversier-Modul gibt prozessorintern entsprechende Signale an andere Funktions-Module ab und stellt über den System-Bus entsprechende Informationen den Aktuatorsystemen zur Verfügung.

Vorzugsweise ergehen beim Betätigen des Vorwärts-, Neutralund Rückwärts-Hebels (Reversiersteller) prozessorintern von einem Reversier-Modul an ein Getriebe-Modul sowie ein Kupplungs-Modul die Aufträge, die Geschwindigkeit aus der aktuellen Fahrtrichtung nach einem vorgegebenen Schema zu reduzieren und bei einer definierten Geschwindigkeit die Kupplung bzw. eine Reversierkupplung zu öffnen. Danach leitet der Reversier-Modus den Reversiervorgang ein. Nach Abschluß des Reversiervorgangs gibt das Reversier-Modul prozessorintern an das Kupplungs-Modul und das Getriebe-Modul die Aufträge, die Kupplung bzw. die Reversierkupplung zu schließen und die Geschwindigkeit nach einem vorgebbaren Schema zu erhöhen und das Fahrzeug dann in umgekehrter Richtung wieder zu beschleunigen.

Einer weiteren bevorzugten Ausgestaltung der Erfindung zufolge ist ein durch die Bedienungsperson betätigbarer Bremssteller, beispielsweise ein Bremspedal vorgesehen, welcher entsprechend seiner Betätigungsstellung elektrische Bremsstellersignale an ein im Prozeßrechner enthaltenes autark arbeitendes Brems-Modul abgibt. Das Brems-Modul übermittelt über den System-Bus in Form von Botschaften Sollwertvorgaben an wenigstens einen Brems-Kontroller, um bei Überschreiten eines vorgebbaren Bremssignals wenigstens einen Bremsaktuator, beispielsweise ein hydraulisches Bremsventil, in Abhängigkeit des Bremssignals zu steuern.

Ferner kann ein vom Bremspedal vorgegebenes Maß an Verzögerung (Retarder) ausgewertet und intern an ein Getriebe-Modul weitergemeldet werden, welches Drehzahlwerte für die einzelnen Elektromotoren ermittelt bzw. korrigiert und diese als Sollwertvorgaben über den System-Bus an Elektromotor-Kontroller, die den Elektromotoren zugeordnet sind, ausgibt.

Vorzugsweise gibt das Brems-Modul bei Betätigung des Bremspedals in einer ersten Betätigungsstufe (Retardieren) einen Auftrag an das Getriebe-Modul ab, um die Geschwindigkeit entsprechend den Vorgaben der Bedienungsperson (z. B. Bremspedalstellung) zu reduzieren, wobei die Bremsen noch nicht wirksam werden. Bei Betätigung des Bremspedals in einer zweiten Betätigungsstufe (Überschreiten eines vorgebbaren Bremssignals) übermittelt das Brems-Modul über den System-Bus in Form von Botschaften Informationen an alle Brems-Kontroller und gegebenenfalls den Kupplungs-Kontroller, um die Bremsen nach den Vorgaben der Bedienungsperson zu aktivieren und gegebenenfalls eine Kupplung im mechanischen Teil des Antriebsstrangs zu öffnen, damit die Hauptbremsen an den Rädern nicht gegen den Verbrennungsmotor arbeiten.

Gemäß einer bevorzugten Weiterbildung der Erfindung übernimmt bei Überschreiten eines vorgebbaren Bremssignals das Brems-Modul die führende Rolle des Getriebe-Moduls und errechnet aus Wunschgeschwindigkeiten, die die Bedienungsperson über das Bremspedal vorgibt, sowie aus rückgemeldeten Istgeschwindigkeiten des Fahrzeugs eine neue Sollgeschwindigkeit, anhand derer, gegebenenfalls zusammen mit den vom Lenk-Modul gemeldeten Sollwertvorgaben für eine Vorderund/oder Hinterachs-Lenkung, aus Kennfeldern Drehzahl-Faktoren für alle Einzelräder ermittelt werden. Die vom Brems-Modul errechneten Raddrehzahlen werden den Brems-Kontrollern der Einzelradbremsen nach Betrag und Richtung in Form von Botschaften übermittelt.

Es ist auch vorteilhaft, wenn bei Überschreiten eines vorgebbaren Bremssignals die Brems-Kontroller die führende Rolle von einem Getriebe-Kontroller übernehmen und die vorgegebenen Radrehzahlen, die der Bremsbetätigung entsprechen und gegebenenfalls durch die Lenkwinkel korrigiert sind, in Abhängigkeit von den Schlupfverhältnissen und der Belastung an den Rädern so einregeln, daß sich die geforderten Geschwindigkeiten einstellen.

Vorzugsweise ist im mechanischen Teil des Antriebsstrangs wenigstens eine Kupplung vorgesehen, durch die der Verbrennungsmotor vom Antriebsstrang abkuppelbar ist. Bei Überschreiten eines vorgebbaren Bremssignals gibt das Brems-Modul prozessorintern einerseits an ein Kupplungs-Modul Informationen zum Öffnen der Kupplung ab und andererseits veranlaßt er ein Getriebe-Modul Informationen in Form von Botschaften an die Elektromotor-Kontroller abzugeben, um diese derart anzusteuern, daß die Kupplung synchron mitgeführt wird und sich jederzeit wieder schließen läßt.

Es ist von Vorteil, die beim Deaktivieren der Bremse erreichte Fahrzeuggeschwindigkeit als neue Wunschgeschwindigkeit im Getriebe-Modul zu speichern, um nach dem Bremsen mit dieser Geschwindigkeit weiterzufahren.

Damit die Bedienungsperson dem Antriebssystem Daten, Kenngrößen, Algorithmen, Wertetabellen und Steuerbefehle mitteilen kann und damit sie Daten und Informationen entnehmen kann, ist zweckmäßigerweise an den Prozeßrechner ein entsprechendes Terminal angeschlossen. Dieses enthält beispielsweise einen Monitor mit Bildschirm und eine Eingabetastatur.

Über dieses Terminal lassen sich beispielsweise auch Arbeitssequenzen für das Nutzfahrzeug und gegebenenfalls für an das Nutzfahrzeug angeschlossene Geräte eingeben, die in einem Sequenz-Speicher des Prozeßrechners abgelegt werden. Bei Aktivierung eines Sequenz-Modus werden prozessorintern entsprechende Informationen an die betroffenen Funktions-Module übermittelt, um die Arbeitssequenzen abzuarbeiten. Dies ist besonders in Verbindung mit dem Precision Farming von Vorteil.

Für die ordnungsgemäße und zuverlässige Kommunikation zwischen der Benutzeroberfläche und den autark operierenden Aktuatorsystemen bzw. Komponenten-Kontrollern hat ein funktionfähiger System-Bus große Bedeutung. Der CAN-Bus hat heute einen hohen technischen Stand erreicht und wird daher auch bei dem erfindungsgemäß ausgebildeten Antriebssystem bevorzugt eingesetzt. Ferner wird vorgeschlagen, den System-Bus für Nutzfahrzeuge, insbesondere für Ackerschlepper redundant auszulegen, um eine zusätzliche Sicherheit für die hochpriore Steuerung von Lenkung und Bremse zu erlangen. Die beiden Buskabel sollten räumlich getrennt voneinander verlegt werden, um bei mechanischer Zerstörung eines Kabels, auf das andere Kabel zurückgreifen zu können. Das Kabel für den zusätzlichen Bus sollte ebenfalls Strom führen und an einer Zusatzbatterie des Prozeßrechners angeschlossen sein.

Die in dem Prozeßrechner enthaltenen Funktions-Module sind nicht auf reine Fahrzeugfunktionen beschränkt. Vielmehr kann es von besonderem Vorteil sein, auch Funktions-Module vorzusehen, die Geräte ansteuern, welche an dem Arbeitsfahrzeug angebaut sind oder mit diesem zusammenarbeiten. Diese Ausbildung kann bei landwirtschaftlichen Maschinen besonders nützlich sein, bei denen Gerätesteuerungen in Abhängigkeit der Fahrzustände und der Position des Arbeitsfahrzeugs erfolgen sollen.

Anhand der Zeichnung, die zwei Ausführungsbeispiele der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: das Blockdiagramm eines erfindungsgemäßen Antriebssystems für ein elektrisch angetriebenes Fahrzeug und
- Fig. 2: das Blockdiagramm eines erfindungsgemäßen Antriebssystems für ein elektro-mechanisch angetriebenes Nutzfahrzeug.

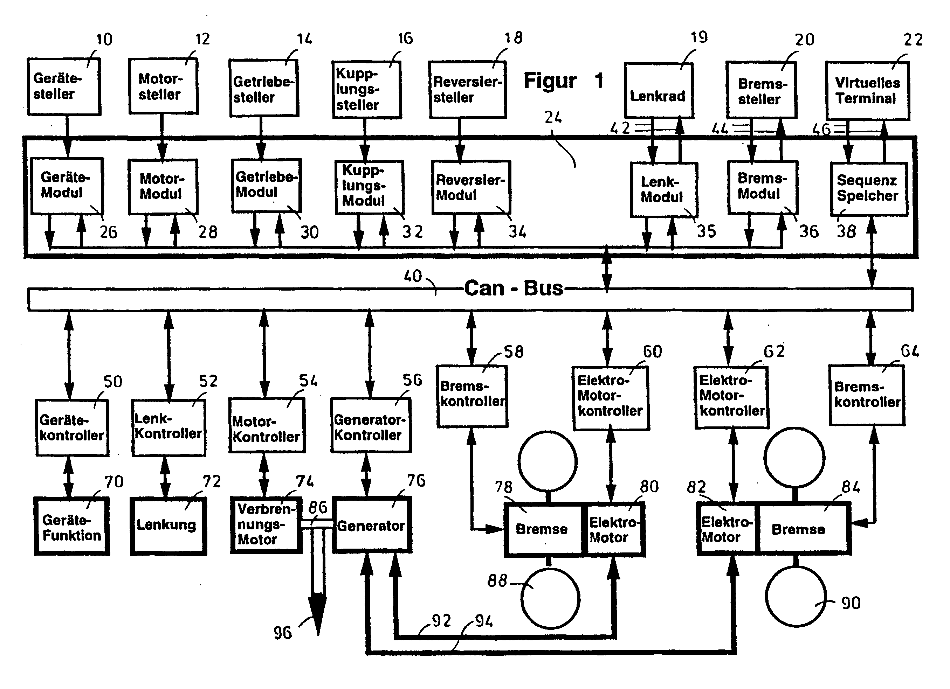

Figur 1 stellt die Steuerung eines erfindungsgemäßen Antriebskonzeptes in übersichtlicher Form dar. In der oberen Reihe sind die Bedienelemente des Fahrzeugs aufgeführt mit einem Gerätesteller 10 zur Vorgabe von Stellsignalen für ein mit dem Fahrzeug verbundenes nicht dargestelltes Gerät, einem Motorsteller 12, der als Handgas oder Fußgas oder einer Kombination aus beiden ausgebildet sein kann, einem als Getriebesteller 14 ausgebildeten Geschwindigkeitshebel, einem Kupplungssteller 16, der ein fußbetätigbares Kupplungspedal sein kann, einem Reversiersteller 18, der als Umschalthebel für den Vorwärts- und Rückwärtsbetrieb ausgebildet sein kann, einem Lenkrad 19 als Lenkbedienungselement, einem Bremssteller 20, beispielsweise in Form eines oder mehrerer Bremspedale mit den Funktionen Retardieren und Bremsen, sowie einem virtuellen Terminal 22, welches die Aus- und Eingabe unterschiedlichster Daten, Kenngrößen, Algorithmen, Wertetabellen, Signale und Informationen erlaubt. Das Terminal 22 kann einen nicht näher dargestellten Monitor und eine Eingabetastatur enthalten, über die sich nach Bedarf Statusmeldungen, Fehleranzeigen, Diagnostik, etc. für alle Systemfunktionen anzeigen lassen und die die Eingabe beliebiger Systemparameter und Systembedingungen ermöglicht und es im Falle von Fehlfunktion auch gestattet, Ersatzfunktionen aufzuschalten.

Die Bedienelemente 10 - 20 und das Terminal 22 bilden mit dem darunter dargestellten Prozeßrechner 24 die Benutzeroberfläche. Der Prozeßrechner 24 beinhaltet die Software-Funktions-Module: Geräte-Modul 26, Verbrennungsmotor-Modul 28, Getriebe-Modul 30, Kupplungs-Modul 32, Reversier-Modul 34, Lenk-Modul 35, Brems-Modul 36 und Betriebsprogramme für das virtuelle Terminal 22 einschließlich eines Speicherbereichs zur Ablage von Bearbeitungssequenzen (Sequenz-Speicher 38).

Die Bedienelemente 10 - 20 sind mit elektrischen Schaltern oder Wegaufnehmern bestückt, die die jeweilige Lage der Bedienelemente 10 - 20 als elektrische Stellsignale erfassen und direkt in Form von elektrischen Vorgaben an die zugehörigen Funktions-Module 26 - 36 weiterleiten. Von den Funktions-Modulen 26 - 36 werden diese Vorgaben parallel und gleichzeitig bearbeitet. Jedes Funktions-Modul 26 - 36 ist autark und arbeitet unabhängig von den anderen Funktions-Modulen 26 - 36. Er beinhaltet die für die Bearbeitung notwendigen Routinen, Parameter und Kennfelder, kann aber auch auf im Prozeßrechner 24 gespeicherte Routinen, Parameter und Kennfelder zurückgreifen. Die Bearbeitungs- bzw. Berechnungsergebnisse der einzelnen Funktions-Module 26 - 36 werden im Prozeßrechner 24 zusammengefaßt und in Form von Botschaften oder auch als Einzelinformationen auf einen System-Bus 40, vorzugsweise einen redundant ausgelegten CAN-Bus, ausgegeben. Diese Botschaften enthalten Sollwertvorgaben für Aktuatorsysteme, die später beschrieben werden.

Alle Funktions-Module 26 - 36 greifen auf einen gemeinsamen Arbeitsbereich des Prozeßrechners 24 zurück, über den sie prozessorintern Informationen austauschen können, ohne den System-Bus 40 zu belasten. Es ist damit möglich, daß Rechenoder Auswertungsergebnisse eines Funktions-Moduls 26 - 36 von einem anderen Funktions-Modul 26 - 36 unmittelbar für dessen Signalaufbereitung genutzt werden.

Auf entsprechende Weise wie die Bedienungsperson bereits heute beim Ansprechen eines ABS (automatischen Bremssystems) durch Vibration des Bremspedals auf die ABS-Aktivierung aufmerksam gemacht wird, so können die mit dem Prozeßrechner 24 verbundenen Bedienelemente der Lenkung 19 und der Bremse 20 dazu benutzt werden, der Bedienungsperson Rückmeldungen über den Zustand des Fahrzeugs zu geben. Ferner können Informationen des Systems auf dem Terminal 22 an die Bedienungsperson zurückgemeldet werden. Diese Eigenschaften sind durch Doppelpfeile 42, 44 und 46 angedeutet.

Die Zusammenfassung autarker Funktions-Module 26 - 36 in einem Prozeßrechner 24 hat das Ziel, die Sicherheit des Systems zu erhöhen und das Antwortzeitverhalten besonders bei Panikmanövern zu verbessern, wenn Lenkung, Kupplung, Bremsen, etc. gleichzeitig betätigt werden. Eine Abwicklung aller Informationen über den System-Bus 40 würde zu nicht zulässigen Zeitverzügen führen. Durch die unmittelbare Kommunikation der Funktions-Module 26 - 36 innerhalb des Prozeßrechners 24, sowie durch prozeßrechnerinterne Rückgriffe auf Parameter, Routinen und Kennfelder wird der System-Bus 40 entlastet, was eine schnellere Abwicklung der Sollwertvorgabenübermittlung erlaubt.

Die Bedienelemente 10 - 20 können Mehrfachfunktionen beinhalten. So kann beispielsweise das Zurücknehmen der Geschwindigkeit mit dem Getriebehebel 14, über einen Retarder oder durch Betätigung der Bremsen 20 erfolgen. Dies erlaubt es, daß bei Ausfall eines Bedienelementes Ersatzfunktionen bereitgestellt werden, welche aufgeschaltet und automatisch der Bedienungsperson über das Terminal 22 angezeigt werden. Einzelheiten zu Ausweich- und Ersatzfunktionen sind durch die WO 94/06651 bekannt geworden. Dort sind die Funktionen zwar im Zusammenhang mit einer Verbrennungsmaschine und einem dieser nachgeordneten hydrostatisch-mechanischem Leistungsverzweigungsgetriebe, welches die Achsen antreibt, beschrieben. Die in der WO 94/06651 beschriebenen Steuerverfahren sind jedoch sinngemäß auf die hier beschriebenen elektrischen Antriebssysteme übertragbar.

Eine weitere Verbesserung der Sicherheit der Funktionen Lenkung, Bremsen, Kupplung etc. kann dadurch erreicht werden, daß der Prozeßrechner 24 für den Fall des Ausfalls der Fahrzeugbatterie mit einer Zusatzbatterie auszurüsten ist. Ferner kann die Sicherheit des System-Bus durch Redundanz erhöht werden, in dem zwei räumlich getrennte Bus-Leitungen verwendet werden. Diese Einzelheiten sind in der Zeichnung jedoch nicht näher dargestellt.

Mit dem System-Bus 40 stehen Kontroller für zugehörige Aktuatorsysteme in Verbindung. In Fig. 1 sind ein Geräte-Kontroller 50, ein Lenk-Kontroller 52, ein Verbrennungsmotor-Kontroller 54, ein Generator-Kontroller 56, ein linker Bremskontroller 58, ein linker Elektromotor-Kontroller 60, ein rechter Elektromotor-Kontroller 62 und ein rechter Brems-Kontroller 64 dargestellt.

Als Aktuatorsysteme sind dargestellt, ein Geräte-Aktuator 70, eine Lenkung 72, ein Verbrennungsmotor 74, ein Generator 76, eine linke Bremse 78, ein linker Elektromotor 80, ein rechter Elektromotor 82 und eine rechte Bremse 84.

Der Geräte-Kontroller 50 steuert den Geräte-Aktuator 70 eines an dem Arbeitsfahrzeug befestigten oder mit diesem zusammenarbeitenden nicht dargestellten Gerätes, welches beispielsweise über elektrische Leitungen und eine Steckdose mit dem Arbeitsfahrzeug in Verbindung stehen kann. Zur Vorgabe von Stellsignalen für die Geräte ist ein Gerätesteller 10 und ein Geräte-Modul 26 dargestellt. Es wurde stellvertretend für eine Mehrzahl möglicher Gerätesteller, Geräte-Module, Geräte-Kontroller und Geräte-Aktuatoren je nur eines dieser Elemente dargestellt.

Der Lenk-Kontroller 52 steuert einen Lenkaktuator 72 an, der beispielsweise als hydraulisches Steuerventil mit nachgeordnetem Lenkzylinder ausgebildet sein kann. Es wurde lediglich ein Lenkkontroller 52 und ein Lenkaktuator 72 dargestellt. Durch das Lenk-Modul 35 können jedoch auch Steuersignale für mehrere Lenkkontroller 52 und Lenkaktuatoren 72, beispielsweise für einzeln lenkbare Räder oder für eine lenkbare Vorderachse sowie eine lenkbare Hinterachse, abgegeben werden.

Der Motor-Kontroller 54 steuert die Einspritzpumpe des Verbrennungs-, insbesondere Dieselmotors 74 an, und der Generator-Kontroller stellt Steuersignale für den Generator 76 bereit, der durch den Verbrennungsmotor 74 über eine Ausgangswelle 86 mechanisch angetrieben wird.

Es ist ein linkes Vorderrad 88 und ein rechtes Vorderrad 90 einer Antriebsachse mit je einer Bremse 78, 84 und je einem Elektromotor 80, 82 angedeutet. Die Bremsen 78, 84 werden durch die Brems-Kontroller 58, 64 angesteuert, während die Elektromotoren 80, 82 Ansteuersignale von den Elektromotor-Kontrollern 60, 62 erhalten. Das Antriebssystem kann sich auch auf weitere elektrisch angetriebene Achsen mit entsprechend angesteuerten Elektromotoren und Bremsen beziehen, die in der Zeichnung aus Übersichtlichkeitsgründen jedoch nicht dargestellt wurden. Die elektrische Leistungszufuhr von dem Generator zu den Elektromotoren erfolgt über entsprechende Elektrokabel 92, 94.

Durch die dargestellten Doppelpfeile die den System-Bus 40 mit den einzelnen Kontrollern 50 - 64 sowie die Kontroller 50 - 64 mit den zugehörigen Aktuatoren 70 - 84 verbinden, wird angedeutet, daß ein Daten- und Informationsaustausch in beide Richtungen möglich ist, so daß einerseits über den System-Bus 40 Sollvorgaben an die einzelnen Kontroller 50 - 64 und von diesen Steuersignale an die zugehörigen Aktuatoren 70 - 84 abgegeben werden. Andererseits können jedoch auch Informationen über die Betriebszustände der Aktuatoren 70 - 84 an die Kontroller 50 - 64 und Informationen von den Kontrollern 50 - 64 über den System-Bus 40 an den Prozeßrechner 24 und die Funktions-Module 26 - 36 zurückgemeldet werden.

Im folgenden wird eine mögliche Funktionsweise des in Fig. 1 dargestellten Antriebssystems beschrieben:

Das Lenk-Modul 35 erhält Stellsignale von dem Lenkrad 19 und ermittelt hieraus Sollwertvorgaben für den Lenkkontroller 52, der die Lenkung 72 steuert. Wie die Doppelpfeile zwischen den einzelnen Lenkkomponenten andeuten ist auch eine Signalrückführung von der Lenkung 72 über die Lenk-Kontroller 52, den System-Bus 40, das Lenk-Modul 35 an das Lenkrad 19 möglich, um beispielsweise Lenkhindernissen an das Lenkrad 19 und die Bedienungsperson zurückzumelden.

Die von dem Lenk-Modul 35 ermittelten Sollwertvorgaben können unter Berücksichtigung der Fahrzeug-Istgeschwindigkeit Korrekturen unterworfen werden, in dem auf einen Kennfeldspeicher im Lenk-Modul 35 oder im Prozeßrechner 24 zurückgegriffen wird, der Daten zur Klassifizierung der Lenksignale nach bestimmten Schranken der Fahrzeug-Istgeschwindigkeit enthält. Die Erfassung der Fahrzeug-Istgeschwindigkeit und Aufschaltung auf den System-Bus 40 kann auf übliche Weise erfolgen und wurde hier nicht näher beschrieben.

Ferner kann über das virtuelle Teminal 22 das Lenk-Modul 35 angesteuert werden, um Lenkvorgaben einem Lenk-Leitsystem zu entnehmen oder um eingebbare bzw. in dem Prozeßrechner 24 gespeicherte Lenk-Sequenzen auszuführen. Das Lenk-Modul 35 kann ferner unter Berücksichtigung der Ackermann-Bedingungen Korrekturdaten für die Drehzahlen der einzelnen Räder 88, 90 errechnen und diese prozessorintern an das Getriebe-Modul 30 weiterleiten.

Das Verbrennungsmotor-Modul 28 wertet die elektrischen Stellsignale des Motorstellers 12 aus und gibt Sollwertvorgaben für den Verbrennungsmotor-Kontroller 54 aus, der die Einspritzpumpe des Verbrennungsmotors 74 ansteuert. Über den Motorsteller 12 können beispielsweise konstante Zapfwellendrehzahlen für eine an die Ausgangswelle 86 des Verbrennungsmotors 74 angeschlossene Zapfwelle 96 vorgegeben werden. Es ist jedoch auch möglich, das Verbrennungsmotor-Modul 28 zu veranlassen, auf im Prozeßrechner 24 gespeicherte Motorkennfelder zurückzugreifen, mit dem Ziel, den Verbrennungsmotor 74 auf möglichst günstige Betriebsbedingungen, beispielsweise auf einen Betrieb bei einem größstmöglichen Wirkungsgrad, einzustellen. Hierbei kann beispielsweise auf von dem Getriebe-Modul 30 prozessorintern zur Verfügung gestellte Sollgeschwindigkeiten und auf einen vom Verbrennungsmotor 74 rückgemeldeten Leistungsbedarf zurückgegriffen werden.

Das Getriebe-Modul 30 wertet Stellsignale des Getriebestellers 14 aus. Er berücksichtigt hierbei die von dem Lenk-Modul 35 prozessorintern zur Verfügung gestellten lenkwinkelabhängigen Korrekturdaten, und gibt über den System-Bus 40 für jeden Elektromotor-Kontroller 60, 62 Drehzahl-Sollwertvorgaben aus, so daß letztere die zugehörigen Elektromotoren 80, 82 und Räder 88, 90 mit der passenden Geschwindigkeit ansteuern. Das Getriebe-Modul 12 kann auch Stellsignale eines nicht dargestellten Stellelements zur Einstellung einer maximalen Fahrzeuggeschwindigkeit empfangen und anhand dieser die Drehzahlvorgaben und damit die Fahrzeuggeschindigkeit begrenzen. Die Last- und Kraftschlußverhältnisse der Elektromotoren 80, 82 können an die Elektromotor-Kontroller 60, 62 zurückgemeldet werden um die über den System-Bus 40 übermittelten Sollwertvorgaben durch Erhöhung oder Erniedrigung der Elektromotorleistung einzuregeln. Ferner kann auch eine Rückmeldung der Radbelastungen über den System-Bus 40 an das Getriebe-Modul 30 erfolgen, wo bedarfsweise entsprechende Korrekturen der Sollwerte vorgenommen werden.

Der Kupplungs-Kontroller 32 empfängt Stellsignale von dem Kupplungssteller 16 und generiert bei Betätigung des Kupplungsstellers 16 Stellsignale, die prozessorintern an das Getriebe-Modul 30 übermittelt werden, um diesen zu veranlassen, an die Elektromotor-Kontroller 60, 62 Sollwertvorgaben abzusetzen, die denen eines auslaufenden Fahrzeugs entsprechen. Bei Betätigung des Kupplungssteller 16 verhält sich das Fahrzeug damit so, als wenn eine Fahrkupplung in einem mechanischen Antriebsstrang geöffnet wird. Programme für ein auslaufendes Fahrzeug können im Prozeßrechner 24 gespeichert werden.

Über den Reversiersteller 18 lassen sich Stellsignale für ein Reversier-Modul 34 erzeugen. Das Reversier-Modul 34 gibt je nach Einstellung des Reversierstellers 18 in Vorwärts-, Neutral- oder Rückwärtsstellung prozessorintern Signale an das Getriebe-Modul 30 ab, um dieses zu veranlassen die der gewünschten Fahrtrichtung entsprechenden Sollwertvorgaben an die Elektromotor-Kontroller 60, 62 abzusetzen.

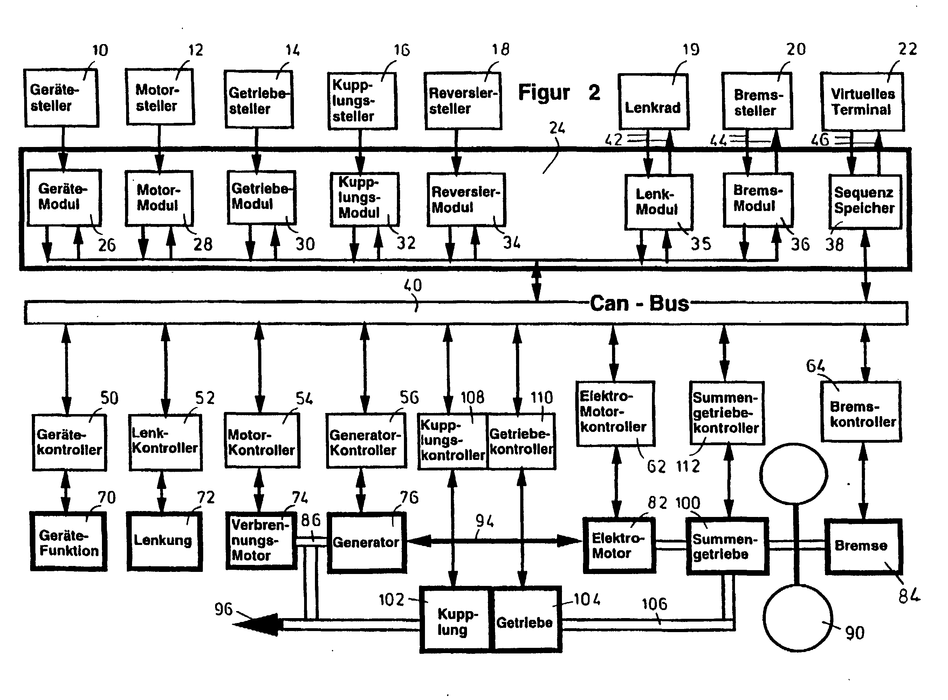

Das Brems-Modul 36 empfängt Stellsignale von dem Bremssteller 20, welches Sollwertvorgaben für die Bremsen 78, 84 bildet, die in Form von Botschaften über den System-Bus 40 an die Brems-Kontroller 58, 64 übermittelt werden. Wird der Bremssteller 20 nur teilweise betätigt (erste Betätigungsstufe), so erzeugt das Brems-Modul 36 ein Retardersignal, welches prozessorintern an das Getriebe-Modul 30 übermittelt wird, um diesen zu veranlassen, die Sollwertvorgabe an die Elektromotor-Kontroller 60, 62 entsprechend des Betätigungshubes des Bremsstellers 20 zurückzunehmen. Hierbei werden die Bremsen 78, 84 noch nicht betätigt. Überschreitet der Betätigungshub des Bremsstellers 20 einen vorgebbaren Wert (zweite Betätigungsstufe), gibt das Brems-Modul 36 über den System-Bus 40 Sollwertvorgaben an die Brems-Kontroller 58, 64 ab, um eine Bremsbetätigung entsprechend der Bremsstellerbetätigung vorzunehmen. Gleichzeitig übernimmt das Brems-Modul 36 die führende Rolle, die das Getriebe-Modul 30 bei der Einstellung der Fahrzeuggeschwindigkeit inne hatte. Er ermittelt aus der durch den Bremssteller 20 vorgegebenen Wunschgeschwindigkeit (bzw. Verzögerung), sowie aus der über den System-Bus 40 rückgemeldeten Istgeschwindigkeit des Fahrzeugs Sollgeschwindigkeiten, die gegebenenfalls durch lenkwinkelabhängige Korrekturwerte des Lenk-Moduls 35 angepaßt werden. Aus den Sollgeschwindigkeiten werden dann Sollwertvorgaben für die Brems-Kontroller 58 64 abgeleitet. Sofern sich eine Kupplung 102 im mechanischen Antriebsstrang befindet (siehe Fig. 2), gibt das Brems-Modul 36 bei Überschreiten des genannten Bremswertes ein Signal zum Öffnen der Kupplung 102 ab.

Zum Speichern und Aufrufen von Arbeitssequenzen enthält der Prozeßrechner 24 wenigstens einen Sequenz-Speicher 38. Über den virtuellen Teminal 22 lassen sich die Inhalte des Sequenz-Speiches 38 an die Anforderungen anpassen. Der Sequenz-Speicher 38 kann sowohl prozessorintern Informationen für die anderen Funktions-Module bereitstellen. Er kann ferner Nachrichten erzeugen, die in Form von Botschaften über den System-Bus ausgegeben werden um entsprechende Funktionen auszulösen.

Das in Fig. 2 dargestellte Antriebssystem entspricht in vielen Einzelheiten dem Antriebssystem der Fig. 1. Gleiche bzw. sich entsprechende Elemente wurden daher in beiden Figuren mit den selben Bezugsziffern belegt. Im Unterschied zur Fig. 1 ist in Fig. 2 lediglich das rechte Rad 90 dargestellt, während das linke Rad der besseren Übersichtlichkeit weggelassen wurde. Es versteht sich, daß dem nicht dargestellten linken Rad die gleichen Antriebs- und Bremskomponenten zugeordnet sind, wie dem rechten Rad 90.

Während der Fig. 1 ein rein elektrischer Antrieb zugrundeliegt, geht aus Fig. 2 ein elektro-mechanischer Antrieb hervor. Hierbei wird jedes angetriebene Rad 90 einerseits über einen durch den Generator 76 gespeisten Elektromotor 82 und andererseits über einen mechanischen Strang von dem Verbrennungsmotor 74 energetisch versorgt. Die elektrische und die mechanische Energie wird in einem Summengetriebe 100 zusammengefaßt und dem Rad 90 zugeführt.

Der mechanische Antriebsstrang, der mit Doppellinien dargestellt ist, besteht aus der Ausgangswelle 86 des Verbrennungsmotors 74, die einerseits eine Zapfwelle 96 antreibt und andererseits über eine Kupplung 102, ein Getriebe 104 und eine Antriebswelle 106 mit dem Summengetriebe 100 verbunden ist. Mit der Antriebswelle 106 können nicht dargestellte Summengetriebe weiterer elektro-mechanisch angetriebener Räder in Verbindung stehen.

Die Kupplung 102 wird durch einen Kupplungs-Kontroller 108 und das Getriebe 104 wird durch einen Getriebe-Kontroller 110 angesteuert. Der Kupplungs-Kontroller 108 und der Getriebe-Kontroller 110 stehen über den System-Bus 40 mit dem Prozeßrechner 24 in Verbindung und erhalten von diesem in Botschaften verschlüsselte Sollwertvorgaben. Ferner ist ein Summengetriebe-Kontroller 112 dargestellt, der der Ansteuerung des zwischen unterschiedlichen Getriebeübersetzungsstufen umschaltbaren Summengetriebes 100 dient und ebenfalls über den System-Bus 40 in Botschaften verschlüsselte Informationen des Prozeßrechners 24 empfängt.

Der Kupplungs-Kontroller 108 empfängt über den System-Bus 40 Botschaften, in denen Informationen zum Öffnen und Schließen der Kupplung 102 enthalten sind. Bei Kupplungsbetätigung erzeugt das Kupplungs-Modul 32 ferner Informationssignale, die prozessorintern an das Motor-Modul 28 und gegebenfalls an das Getriebe-Modul 30 geleitet werden, die eine Drehzahlangleichung der Ein- und der Ausgangswelle der Kupplung 102 bewirken, so daß die Kupplung 102 ruckfrei jederzeit wieder geschlossen werden kann.

Bei dem Getriebe 104 kann es sich um ein Umschaltgetriebe zur Umschaltung zwischen verschiedenen Übersetzungsverhältnissen handeln. Das Getriebe 104 kann auch eine nicht näher dargestellte Wendekupplung enthalten. Die Umschaltung des Getriebes 104 und der Wendekupplung werden von dem Getriebe-Kontroller 110 vorgenommen. Die Vorgaben für den Getriebe-Kontroller 110 werden beispielsweise von dem Reversier-Modul 34 und/oder dem Getrieb-Modul 30 über den System-Bus 40 bereitgestellt.

Auch wenn die Erfindung lediglich anhand zweier Ausführungsbeispiele beschrieben wurde, erschließen sich für den Fachmann im Lichte der vorstehenden Beschreibung sowie der Zeichnung viele verschiedenartige Alternativen, Modifikationen und Varianten.

## Patentansprüche

1. Antriebssystem für Nutzfahrzeuge, insbesondere für landwirtschaftliche oder industrielle Schlepper, mit einem durch einen Verbrennungsmotor (74) angetriebenen Generator (76), mit wenigstens einer Antriebsachse, deren Räder (88, 90) jeweils durch einen zugehörigen, durch den Generator (76) gespeisten Elektromotor (80, 82) angetrieben werden, mit wenigstens einer Lenkachse, deren Räder (88, 90) gemeinsam oder einzeln durch Lenkaktuatoren (52) gelenkt werden, und mit manuellen Bedienelementen (12, 14, 19, 20) für wenigstens die Fahrfunktionen Lenkung und Geschwindigkeitsvorgabe, wobei die Benutzeroberfläche einen Prozeßrechner (24) enthält, der sowohl für hochpriore Signale der Bedienelemente (19, 20), wie die Signale eines Lenkbedienelements (19) als auch für niederpriore Signale sonstiger Bedienelemente (12, 14, 16, 18), wie die Signale einer Geschwindigkeitsvorgabe, parallele und autark arbeitende Funktions-Module (26, 28, 30, 32, 34, 35, 36) enthält und welcher Sollwertvorgaben für die zugehörigen Aktuatorsysteme (70, 72, 74, 76, 78, 80, 82, 84, 100, 102, 104), wie Elektromotor (80, 82) und Lenkaktuatoren (72), in Form von Botschaften über einen System-Bus (40) abwickelt, während die Rechenergebnisse der einzelnen Funktions-Module (26, 28, 30, 32, 34, 35, 36) zur Verbesserung des Echtzeitverhaltens des Gesamtsystems prozessorintern ausgetauscht und miteinander abgeglichen werden.

2. Antriebssystem nach Anspruch 1, **dadurch gekennzeichnet, daß** der Prozessrechner (24) wenigstens ein Lenk-Modul (35) zur Aufbereitung der hochprioren elektrischen Signale wenigstens eines Lenkbedienelements (19) sowie wenigstens ein parallel und autark zum Lenk-Modul (35) arbeitendes Brems-Modul (36) zur Aufbearbeitung hochpriorer elektrischer Bremssignale wenigstens eines Bedienelements (20) für die Fahrfunktion Bremsen enthält.

3. Antriebssystem nach Anspruch 1 oder 2, **dadurch gekennzeichnet, daß** der Prozeßrechner (24) ein autark arbeitendes Lenk-Modul (35) mit einem Lenkwinkel-Kennfeldspeicher enthält, aufgrund dessen den Signalen eines Lenkbedienelements (19) unter Berücksichtigung der Ackermann-Bedingungen oder dergleichen Korrekturdaten für jedes Rad (88, 90) zugeordnet werden, die prozessorintern wenigstens einem weiteren autark arbeitenden Funktions-Modul (30, 36), der in Botschaften verschlüsselte Informationen für die Radantriebe und/oder Bremsen (78, 84) bereitstellt, zugeleitet werden.

4. Antriebssystem nach einem der Ansprüche 1 bis 3, **dadurch gekennzeichnet, daß** der Prozeßrechner (24) ein autark arbeitendes Lenk-Modul (35) enthält, welches vorrangig Vorgaben eines Lenkbedienelements (19) verarbeitet, nachrangig jedoch auch Vorgaben von automatischen Lenk-Leitsystemen direkt und/oder Lenk-Sequenzen von gespeicherten Planungsvorgaben indirekt akzeptiert, wobei über ein Terminal (22) die Betriebsmodi Lenk-Leitsystem und/oder Lenk-Sequenzen vorwählbar bzw. nach Ausschaltung infolge eines Fahrereingriffs reaktivierbar sind.

5. Antriebssystem nach einem der Ansprüche 1 bis 4, **dadurch gekennzeichnet, daß** der Prozeßrechner (24) ein autark arbeitendes Lenk-Modul (35) mit einem Kennfeldspeicher enthält und Stellsignale eines Lenkbedienelements (19) und Istsignale eines Fahrzeuggeschwindigkeitsnehmers empfängt, und daß der Kennfeldspeicher den Stellsignalen in Abhängigkeit vorgebbarer Schranken der Fahrzeugistgeschwindigkeit Lenkwinkel-Sollwertvorgaben für die wenigstens eine Lenkachse zuordnet.

6. Antriebssystem nach einem der Ansprüche 1 bis 5, **dadurch gekennzeichnet, daß** der Prozeßrechner (24) ein autark arbeitendes Getriebe-Modul (30) zur Aufbereitung der niederprioren Signale wenigstens eines Getriebesteller (14) aufweist, der gegebenenfalls einen Geschwindigkeits-Kennfeldspeicher umfaßt, wobei das Getriebe-Modul (30) Drehzahlwerte für die einzelnen Elektromotoren (80, 82) ermittelt und diese in Form von Botschaften über den System-Bus (40) an Elektromotor-Kontroller (60, 62), die den einzelnen Elektromotoren (80, 82) zugeordnet sind, ausgibt, und prozessorintern auch Korrekturdaten an wenigstens ein weiteres autark arbeitendes Funktions-Modul (35) übermittelt.

7. Antriebssystem nach einem der Ansprüche 1 bis 6, **dadurch gekennzeichnet, daß** der Prozeßrechner (24) ein autark arbeitendes Getriebe-Modul (30) enthält, das aus durch den Getriebesteller (14) vorgebbaren Geschwindigkeits-Stellsignalen und aus den über den System-Bus (40) rückgemeldeten Fahrzeugistgeschwindigkeiten Sollgeschwindigkeiten bestimmt und diese mit Drehzahlfaktoren, die aus den lenkwinkelabhängigen Korrekturdaten eines Lenk-Moduls (35) gebildet und den einzelnen Rädern (88, 90) zugeordnet sind, verrechnet, um Drehzahl-Sollwertvorgaben nach Betrag und Richtung für die Einzelantriebe zu berechnen und in Form von Botschaften über den System-Bus (40) den einzelnen Elektromotor-Kontrollern (60, 62) übermittelt.

8. Antriebssystem nach einem der Ansprüche 1 bis 7, **dadurch gekennzeichnet, daß** das Getriebe-Modul (30) mit einer von der Bedienungsperson betätigbaren Geschwindigkeits-Vorgabeeinrichtung, durch die maximale Fahrzeugwunschgeschwindigkeiten vorgebbar sind, und mit einem Fahrzeugistgeschwindigkeitsnehmer in Verbindung steht und daß das Getriebe-Modul (30) bei Erreichen der eingestellten maximalen Fahrzeugwunschgeschwindigkeit die über den System-Bus (40) ausgegebenen Drehzahlsollwertvorgaben reduziert, um ein Überschreiten der maximalen Fahrzeugwunschgeschwindigkeit zu vermeiden.

9. Antriebssystem nach einem der Ansprüche 1 bis 8, **dadurch gekennzeichnet, daß** jedem Elektromotor (80, 82) ein Elektromotor-Kontroller (60, 62) zugeordnet ist, der unter Berücksichtigung der am zugehörigen Rad (88, 90) vorherrschenden Last- und/oder Kraftschlußverhältnisse die als Sollwertvorgaben über den System-Bus (40) übermittelten Solldrehzahlen durch Erhöhung oder Erniedrigung der Drehmomente bzw. Leistung einregelt.

10. Antriebssystem nach einem der Ansprüche 1 bis 9, **dadurch gekennzeichnet, daß** der Prozeßrechner (24) ein autark arbeitendes Verbrennungsmotor-Modul (28) enthält, der aus von der Bedienungsperson vorgegebenen und/oder prozessorintern zur Verfügung stehenden Solldrehzahlen Sollwertvorgaben für einen Verbrennungsmotor-Kontroller (54) zur Einstellung der Kraftstoffeinspritzmenge bereitstellt, die über den System-Bus (40) ausgegeben werden.

11. Antriebssystem nach Anspruch 10, **dadurch gekennzeichnet, daß** das Verbrennungsmotor-Modul Motor-Kennfelder für den Verbrennungsmotor (74) und/oder Generator-Kennfelder für den Generator (76) enthält und daß im Verbrennungsmotor-Modul (28) Einspritzmengensollwertvorgaben für den Verbrennungsmotor-Kontroller (54) aus der Sollgeschwindigkeit, dem Leistungsbedarf des Fahrzeugs und den Kennfeldern so ermittelt und optimiert werden, daß sich günstige Gesamtwirkungsgrade des Antriebssystems ergeben.

12. Antriebssystem nach einem der Ansprüche 1 bis 11, **dadurch gekennzeichnet, daß** eine durch den Verbrennungsmotor (74) antreibbare Zapfwelle (96) vorgesehen ist und daß ein Verbrennungsmotor-Modul (28) mit einer von einer Bedienungsperson einstellbaren Vorgabeeinrichtung (12) in Verbindung steht und bei eingeschaltetem Zapfwellenbetrieb an den Verbrennungsmotor-Kontroller (28) den gewünschten Motordrehzahlsollwert ausgibt.

13. Antriebssystem nach einem der Ansprüche 1 bis 12, **dadurch gekennzeichnet, daß** ein durch die Bedienungsperson betätigbarer Kupplungssteller (16) vorgesehen ist, der elektrische Signale an ein im Prozeßrechner (24) enthaltenes autark arbeitendes Kupplungs-Modul (32) abgibt, daß wenigstens ein Modell eines ausrollenden Fahrzeugs im Prozeßrechner (24) gespeichert ist, und daß das Kupplungs-Modul (32) bei Betätigung des Kupplungsstellers (16) in einer ersten Betätigungsphase prozessorintern einen Auftrag an ein Getriebe-Modul (30) abgibt, um die Fahrzeuggeschwindigkeit entsprechend des gespeicherten Modells des auslaufenden Fahrzeugs zu generieren und als Sollwertvorgabe für einen Getriebe-Kontroller (110) auf den System-Bus (40) zu geben.

14. Antriebssystem nach einem der Ansprüche 1 bis 13, **dadurch gekennzeichnet, daß** der Verbrennungsmotor (74) unmittelbar oder mittelbar über ein Getriebe (104) eine Antriebswelle (106) antreibt und daß jedem Rad (88, 90) wenigstens einer Antriebsachse ein Summengetriebe (100) zugeordnet ist, welches die Ausgangsleistung der Antriebswelle (106) und die des zugehörigen Elektromotors (80, 82) kombiniert und an das Rad (88, 90) abgibt.

15. Antriebssystem nach Anspruch 14, **dadurch gekennzeichnet, daß** ein durch die Bedienungsperson betätigbarer Kupplungssteller (16) sowie im mechanischen Antriebsstrang wenigstens eine Kupplung (102) vorgesehen sind, wobei der Kupplungssteller (16) elektrische Signale an ein im Prozeßrechner (24) enthaltenes autark arbeitendes Kupplungs-Modul (32) abgibt, daß das Kupplungs-Modul (32) bei einer Betätigung des Kupplungsstellers (16) zum Öffnen der Kupplung (102) über den System-Bus (40) einerseits Informationen an einen Kupplungs-Kontroller (108) übermittelt, um diesen zu veranlassen die Kupplung (102) zu öffnen und den Leistungsfluß des mechanischen Antriebsstrangs zu unterbrechen, und gegebenenfalls andererseits prozessorintern Vorgaben an einen Getriebe-Kontroller (110, 112) übermittelt, um diesen zu beauftragen, die Kupplung (102) so synchron mitführen, daß sie jederzeit wieder geschlossen werden kann.

16. Antriebssystem nach Anspruch 14 oder 15, **dadurch gekennzeichnet, daß** ein durch die Bedienungsperson betätigbarer Reversiersteller (18) zur Erzeugung von Reversiersignalen sowie im mechanischen Antriebsstrang eine Wendekupplung vorgesehen sind, daß der Reversiersteller (18) elektrische Signale an ein im Prozeßrechner (24) enthaltenes autark arbeitendes Reversier-Modul (34) abgibt, und daß in dem Prozeßrechner (24) Bearbeitungssequenzen zur Durchführung des Reversiervorganges gespeichert sind, die in Abhängigkeit der Stellung des Reversierstellers (18) abrufbar sind, um zur Durchführung des Reversiervorganges entsprechende Signale prozessorintern an andere Funktions-Module (28, 30, 32, 36) zu übermitteln und entsprechende Informationen in Form von Botschaften auf den System-Bus (40) abzusetzen.

17. Antriebssystem nach Anspruch 16, **dadurch gekennzeichnet, daß** der Reversier-Modus (34) bei Erzeugung eines geeigneten Reversiersignals einen Steueralgorithmus, der ein Programm oder Schema zur Reduzierung der Drehzahlen der Elektromotoren (80, 82) enthält, aktiviert und prozessorintern Rechenergebnisse zur Reduzierung der Drehzahlen an ein Getriebe-Modul (30) abgibt, und daß das Reversier-Modul (34) bei Unterschreiten eines definierten Geschwindigkeitsbetrags in Botschaften verschlüsselte Informationen zum Öffnen der Wendekupplung über den System-Bus (40) an einen Wendekupplungs-Kontroller absetzt.

18. Antriebssystem nach einem der Ansprüche 1 bis 17, **dadurch gekennzeichnet, daß** ein durch die Bedienungsperson betätigbarer Bremssteller (20) vorgesehen ist, der entsprechend seiner Betätigungsstellung elektrische Bremssignale an ein im Prozeßrechner (24) enthaltenes autark arbeitendes Brems-Modul (36) abgibt, wobei das Brems-Modul (36) über den System-Bus (40) Sollwertvorgaben wenigstens an einen Brems-Kontroller (58, 64) abwickelt, um bei Überschreiten eines vorgebbaren Bremssignals wenigstens einen Bremsaktuator (78, 84) in Abhängigkeit des Bremssignals zu steuern.

19. Antriebssystem nach Anspruch 18, **dadurch gekennzeichnet, daß** das Brems-Modul (36) das von dem Bremssteller (20) vorgegebene Maß an Verzögerung auswertet und prozessorintern Korrekturdaten wenigstens an ein autark arbeitendes Getriebe-Modul (30) übermittelt, welches Drehzahlwerte für die einzelnen Elektromotoren (80, 82) ermittelt bzw. korrigiert und diese als Sollwertvorgaben über den System-Bus (40) an die Elektromotor-Kontroller (60, 62), die den Elektromotoren (80, 82) zugeordnet sind, ausgibt.

20. Antriebssystem nach Anspruch 18 oder 19, **dadurch gekennzeichnet, daß** bei Überschreiten eines vorgebbaren Bremssignals das Brems-Modul (36) die führende Rolle eines Getriebe-Moduls (30) übernimmt und aus der durch den Bremssteller (20) vorgegebenen Wunschgeschwindigkeit sowie aus der über den System-Bus (40) rückgemeldeten Fahrzeugistgeschwindigkeit Solldrehzahlen errechnet und als Sollwertvorgaben für die Brems-Kontroller (58, 64) auf den System-Bus (40) ausgibt.

21. Antriebssystem nach Anspruch 20, **dadurch gekennzeichnet, daß** der Prozeßrechner (24) einen Kennfeldspeicher enthält, in welchem den von einem Lenk-Modul (35) übermittelten lenkwinkelabhängigen Korrekturdaten Drehzahlfaktoren zugeordnet sind, durch die die momentanen Sollgeschwindigkeiten für die Einzelradbremsen (78, 84) korrigiert werden, um diese an die aktuellen Lenkwinkel anzupassen.

22. Antriebssystem nach einem der Ansprüche 18 bis 21, **dadurch gekennzeichnet, daß** bei Überschreiten eines vorgebbaren Bremssignals die Brems-Kontroller (58, 64) die führende Rolle der Elektromotoren-Kontroller (60, 62) und/oder wenigstens eines Getriebe-Kontrollers (110) übernehmen und die Raddrehzahlen in Abhängigkeit von Schlupfverhältnissen und der Belastung der Räder (88, 90) so einregeln, daß sich die vom Bremssteller (20) geforderten Geschwindigkeiten einstellen.

23. Antriebssystem nach einem der Ansprüche 18 bis 22, **dadurch gekennzeichnet, daß** im mechanischen Teil des Antriebsstangs eine durch einen Kupplungs-Kontroller (108) ansteuerbare Kupplung (102) vorgesehen ist und daß das Brems-Modul (36) bei Überschreiten eines vorgebbaren Bremssignals einerseits an ein Kupplungs-Modul (32), das über den System-Bus (40) mit einem Kupplungs-Kontroller (108) in Verbindung steht, prozessorintern Informationen zum Öffnen der Kupplung (102) übermittelt, und andererseits die Prozeßführung auf das Brems-Modul (36) und/oder auf die Brems-Kontroller (58, 64) überträgt.

24. Antriebssystem nach einem der Ansprüche 18 bis 23, **dadurch gekennzeichnet, daß** im mechanischen Teil des Antriebsstrangs wenigstens eine Kupplung (102) vorgesehen ist und daß bei Überschreiten eines vorgebbaren Bremssignals das Brems-Modul (36) prozessorintern an ein Kupplungs-Modul (32) Informationen zum Öffnen der Kupplung (102) abgibt und ein Getriebe-Modul (30) veranlaßt in Botschaften verschlüsselte Informationen über den System-Bus (40) an Antriebs-Kontroller abzugeben, um diese derart anzusteuern, daß die Kupplung (102) synchron mitgeführt wird und sich jederzeit wieder schließen läßt.

25. Antriebssystem nach einem der Ansprüche 18 bis 24, **dadurch gekennzeichnet, daß** die beim Deaktivieren des Bremsstellers (20) erreichte Geschwindigkeit von einem Getriebe-Modul (30) als neue Wunschgeschwindigkeit gespeichert wird.

26. Antriebssystem nach einem der Ansprüche 1 bis 25, **dadurch gekennzeichnet, daß** an den Prozeßrechner (24) ein Terminal (22) zur Ein- und Ausgabe von Informationen, Daten- und Steuerbefehlen und dergleichen angeschlossen ist.

27. Antriebssystem nach einem der Ansprüche 1 bis 26, **dadurch gekennzeichnet, daß** der Prozeßrechner (24) wenigstens einen Sequenz-Speicher (38) enthält, in dem vorgebbare Arbeitssequenzen für die Aktuatorsysteme (70, 72, 74, 76, 78, 80, 82, 84, 100, 102, 104) abspeicherbar sind, und der bei Aktivierung eines Sequenz-Modus prozessorintern Informationen an betroffene Funktions-Module (26, 28, 30, 32, 34, 35, 36) übermittelt, um die Arbeitssequenzen abzuarbeiten.

28. Antriebssystem nach einem der Ansprüche 1 bis 27, **dadurch gekennzeichnet, daß** der System-Bus (40) als CAN-Bus ausgelegt ist und wenigstens zwei unabhängige, redundante Bus-Kabel enthält und daß eine von der Fahrzeugbatterie unabhängige Zusatzbatterie vorgesehen ist, die wenigstens bei Ausfall der Fahrzeugstromversorgung den Prozeßrechner und den redundanten System-Bus (40) versorgt.

29. Antriebssystem nach einem der Ansprüche 1 bis 28, **dadurch gekennzeichnet, daß** der Prozeßrechner (24) wenigstens ein autark arbeitendes Geräte-Modul (26) enthält, der von einer Bedienungsperson vorgegebene und/oder aus einem Sequenz-Speicher (38) gewonnene Stellsignale auswertet und über den System-Bus (40) Sollwertvorgaben an wenigstens einen Geräte-Kontroller (50) ausgibt.

## Claims

1. A drive system for utility vehicles, especially for agricultural or industrial tractors, with a generator (76) driven by an internal combustion engine (74), at least one drive axle, whose wheels (88, 90) are each driven by an associated electric motor (80, 82) supplied by the generator (76), at least one steering axle whose wheels (88, 90) are steered together or individually by steering actuators (52), and manual control elements (12, 14, 19, 20) for at least the driving functions of steering and speed settings, wherein the user interface includes a process computer (24) which includes parallel and autonomously operating function modules (26, 28, 30, 32, 34, 35, 36) for both high priority signals of the control elements (19, 20), such as the signals of a steering control element (19) and low priority signals of other control elements (12, 14, 16, 18), such as the signals of a speed setting, and which develops controlling settings for the associated actuator systems (70, 72, 74, 76, 78, 80, 82, 84, 100, 102, 104), such as electric motors (80, 82) and steering actuators (72) in the form of messages over a system bus (40), while the computation results of the individual function modules (26, 28, 30, 32, 34, 35, 36) are exchanged within the processor and balanced with one another to improve the real time performance of the overall system.

2. A drive system according to claim 1, **characterized in that** the process computer (24) includes at least one steering module (35) for processing the high priority electric signals of at least one steering control element (19) and at least one brake module (36) operating in parallel with and autonomously with respect to the steering module (35) for processing high priority electric brake signals of at least one control element (20) for the driving function of braking.

3. A drive system according to claim 1 or 2, **characterized in that** the process computer (24) includes an autonomously operating steering module (35) with a steering angle performance map memory, on the basis of which correction data for each wheel (88, 90) are associated with the signals of a steering control element (19) having regard to the Ackermann conditions or the like, which are passed within the processor to at least one further autonomously operating function module (30, 36), which provides encoded information in the messages for the wheel drives and/or brakes (78, 84).

4. A drive system according to any of claims 1 to 3, **characterized in that** the process computer (24) includes an autonomously operating steering module (35), which processes the settings of a steering control element (19) with priority but also, subordinately, accepts settings of automatic steering guide systems directly and/or steering sequences from stored plan settings indirectly, wherein the operating modes for steering guide system and/or steering sequences can be selected or, after switching off in response to a driver intervention, be reactivated via a terminal (22).

5. A drive system according to any of claims 1 to 4, **characterized in that** the process computer (24) includes an autonomously operating steering module (35) with a performance map memory and receives controlling signals of a steering control element (19) and actual value signals of a vehicle speed sensor, and **in that** the performance map memory associates steering angle controlling settings for the at least one steering axle with the controlling signals in dependence on predetermined limits on the vehicle actual value speed.

6. A drive system according to any of claims 1 to 5, **characterized in that** the process computer (24) comprises an autonomously operating gearbox module (30) for processing the lower priority signals of at least one gearbox control (14), which optionally comprises a speed performance map memory, wherein the gearbox module (30) determines speed or rotation values for the individual electric motors (80, 82) and issues these in the form of messages via the system bus (40) to electric motor controllers (60, 62), which are associated with the individual electric motors (80, 82) and within the processor also transmits correction date to at least one further autonomously operating function module (35).

7. A drive system according to any of claims 1 to 6, **characterized in that** the process computer (24) includes an autonomously operating gearbox module (30), which determines controlling speeds from speed controlling signals determined by the gearbox control (14) and from the vehicle actual value speeds fed back over the system bus (40) and calculates these with speed of rotation factors which are formed from the steering angle-dependent correction data of a steering module (35) and associated with the individual wheels (88, 90), in order to compute speed of rotation controlling settings according to the amount and direction for the individual drives and transmits then in the form of messages over the system bus (40) to the individual electric motor controllers (60, 62).

8. A drive system according to any of claims 1 to 7, **characterized in that** the gearbox module (30) is connected to a speed setting device operable by the operator, through which the maximum desired vehicle speeds can be set, and to a vehicle actual value speed sensor, and **in that** the gearbox module (30) reduces the speed of rotation controlling setting issues over the system bus (40) on reaching the set maximum desired vehicle speed, in order to avoid exceeding the maximum desired vehicle speed.

9. A drive system according to any of claims 1 to 8, **characterized in that** an electric motor controller (60, 62) is associated with each electric motor (80, 82) which regulates the controlling speeds of rotation transmitted as controlling settings over the system bus (40), by raising or lowering the torque or power, taking into account the load and/or frictional engagement conditions obtaining at the associated wheel (88, 90).

10. A drive system according to any of claims 1 to 9, **characterized in that** the process computer (24) includes and autonomously operating internal combustion engine module (28), which provides controlling settings for an internal combustion engine controller (54) for adjusting the fuel injection amount from controlling speeds of rotation determined by the operator and/or available within the processor, which settings are issued over the system bus (40).

11. A drive system according to claim 10, **characterized in that** the internal combustion engine module includes engine performance maps for the internal combustion engine (74) and/or generator performance maps for the generator (76) and **in that** injection amount controlling settings for the internal combustion engine controller (54) are so determined and optimised in the internal combustion engine module (28) that good overall efficiencies of the drive system result.

12. A drive system according to any of claims 1 to 11, **characterized in that** a PTO shaft (96) drivable by the internal combustion engine (74) is provided and **in that** an internal combustion engine module (28) is connected to a setting device (12) which can be set by an operator and issues the desired engine speed controlling value to the internal combustion engine controller (28) with the PTO shaft drive switched on.

13. A drive system according to any of claims 1 to 12, **characterized in that** a clutch control (16) operable by the operator is provided, which delivers electric signals to an autonomously operating clutch module (32) contained in the process computer (24), **in that** at least one model of a coasting vehicle is stored in the process computer (24) and **in that** the clutch module (32) in a first operating phase issues within the processor a setting to a gearbox module (30) on actuation of the clutch control (16), in order to generate the vehicle speed corresponding to the stored model of the coasting vehicle and to provide it to the system bus (40) as a controlling setting for a gearbox controller (110).

14. A drive system according to any of claims 1 to 13, **characterized in that** the internal combustion engine (74) drives a drive shaft (106) directly or indirectly through a gearbox (104) and **in that** a summing gear (100) is associated with each wheel (88, 90) of at least one drive axle and combines the output power of the drive shaft (106) and that of the associated electric motor (80, 82) and supplies this to the wheel (88, 90).

15. A drive system according to claim 14, **characterized in that** a clutch control (16) operable by the operator and at least one clutch (102) in the mechanical drive train are provided, wherein the clutch control (16) issues electric signals to an autonomously operating clutch module (32) contained in the process computer (24), **in that** the clutch module (32) on the one hand transmits information to a clutch controller (108) over the system bus (40) on actuation of the clutch control (16) to open the clutch (102), in order to cause the clutch controller to open the clutch (102) and interrupt the power flow of the mechanical drive train, and optionally on the other hand transmits internal processor settings to a gearbox controller (110, 112), in order to instruct this to entrain the clutch (102) synchronously so that it can be closed again at any time.

16. A drive system according to claim 14 or 15, **characterized in that** a reverse control (18) operable by the operator for generating reversing signals and a turning clutch in the mechanical drive train are provided, **in that** the reverse control (18) issues electric signals to an autonomously operating reverser module (34) contained in the process computer (24), and **in that** in the process computer (24) operating sequences for implementing the reversing operation are stored and can be called in dependence on the setting of the reverse control (18), in order to transmit to other function modules (28, 30, 32, 36) corresponding signals within the processor for performance of the reversing operation and to place corresponding information in the form of messages on the system bus (40).

17. A drive system according to claim 16, **characterized in that**, on generation of a suitable reversing signal, the reverser mode (34) activates a control algorithm which includes a program or model for reducing the speed of rotation of the electric motors (80, 82) and issues processing results within the processor for reducing the speed of rotation to a gearbox module (30), and **in that** the reverser module (34) places encoded information in messages to a turning clutch controller for opening the turning clutch via the system bus (40) on falling below a defined speed amount.

18. A drive system according to any of claims 1 to 17, **characterized in that** a brake control (20) operable by the operator is provided and issues electric brake signals to an autonomously operating brake module (36) contained in the process computer (24) corresponding to its operating setting, wherein the brake module (36) develops via the system bus (40) controlling settings to at least one brake controller (58, 64), in order to control at least one brake actuator (78, 84) in dependence on the brake signal on exceeding a predetermined brake signal.

19. A drive system according to claim 18, **characterized in that** the brake module (36) evaluates the amount of retardation given by the brake control (20) and transmits within the processor correction data to an autonomously operating gearbox module (30), which determines or corrects speed of rotation values for the individual electric motors (80, 82) and issues these as controlling settings over the system bus (40) to the electric motor controllers (60, 62) which are associated with the electric motors (80, 82).

20. A drive system according to claim 18 or 19, **characterized in that** the brake module (36) takes over the controlling role of a gearbox module (30) on exceeding a predetermined brake signal and computes controlling speeds of rotation from the desired speed given by the brake control (20) and from the vehicle speed fed back over the system bus (40) and issues them on the system bus (40) as controlling settings for the brake controllers (58, 64).

21. A drive system according to claim 20, **characterized in that** the process computer (24) includes a performance map memory, in which speed of rotation factors are associated with correction data dependent on the steering angle transmitted from a steering module (35), through which the instantaneous controlling speeds for the individual wheel brakes (78, 84) are corrected, in order to match these to the current steering angle.

22. A drive system according to any of claims 18 to 21, **characterized in that** the brake controllers (58, 64) take over the controlling role of the electric motor controllers (60, 62) and/or of at least one gearbox controller (110) on exceeding a predetermined brake signal, and so regulate the wheel speeds of rotation in dependence on slip conditions and the loading of the wheels (88, 90) that the speeds required by the brake control (20) are set.

23. A drive system according to any of claims 18 to 22, **characterized in that** a clutch (102) which can be controlled by a clutch controller (108) is provided in the mechanical part of the drive train and **in that** the brake module (36), on exceeding a predetermined brake signal, transmits on the one hand information internal to the processor for opening the clutch (102) to a clutch module (32) which is connected to a clutch controller (108) over the system bus (40) and on the other hand transmits the process control to the brake module (36) and/or to the brake controllers (58, 64).

24. A drive system according to any of claims 18 to 23, **characterized in that** at least one clutch (102) is provided in the mechanical part of the drive train and **in that**, on exceeding a predetermined brake signal, the brake module (36) issues information internal to the processor to a clutch module (32) for opening the clutch (102) and causes a gearbox module (30) to issue information encoded in messages over the system bus (40) to a drive controller, in order so to control this that the clutch (102) is entrained synchronously and can be closed again at any time.

25. A drive system according to any of claims 18 to 24, **characterized in that** the speed attained on deactivating the brake control (20) is stored by a gearbox module (30) as a new desired speed.

26. A drive system according to any of claims 1 to 25, **characterized in that** a terminal (22) for input and output of information, data and control commands and the like is connected to the process computer (24).

27. A drive system according to any of claims 1 to 26, **characterized in that** the process computer (24) includes at least one sequence memory (38) in which predetermined operating sequences for the actuator systems (70, 72, 74, 76, 78, 80, 82, 84, 100, 102, 104) can be stored, and which transmits information internal to the processor to the function modules (26, 28, 30, 32, 34, 35, 36) concerned on activation of a sequence mode, in order to implement the operating sequence.

28. A drive system according to any of claims 1 to 27, **characterized in that** the system bus (40) is designed as a CAN bus and includes at least two independent, redundant bus cables and **in that** a supplementary battery independent of the vehicle battery is provided, which supplies at least the process computer and the redundant system bus (40) on failure of the vehicle current supply.

29. A drive system according to any of claims 1 to 28, **characterized in that** the process computer (24) includes at least one autonomously operating implement module (26, which evaluates controlling signals determined by an operator and/or derived from a sequence memory (38) and issues controlling settings to at least one implement controller (50) over the system bus (40).

## Revendications

1. Système d'entraînement pour véhicules utilitaires, en particulier pour des tracteurs agricoles ou industriels avec un générateur (76) entraîné par un moteur à combustion (74), avec au moins un essieu d'entraînement, dont les roues (88, 90) sont entraînées respectivement par un moteur électrique (80, 82) spécifique et alimenté par le générateur (76), avec au moins un essieu directeur, dont les roues (88, 90) sont braquées ensembles ou individuellement par des actionneurs de braquage (52), et avec des éléments de commande manuels (12, 14, 19, 20) pour au moins les fonctions de conduite braquages et spécifications de vitesse, l'interface utilisateur contenant un calculateur industriel (24), qui contient des modules de fonction (26, 28, 32, 34, 35, 36) parallèles et travaillant de façon autonome aussi bien pour des signaux à haute priorité des éléments de commande (19, 20) comme les signaux d'un élément de commande de braquage (19) que pour des signaux à faible priorité de divers éléments de commande (12, 14, 16, 18), comme les signaux d'une spécification de vitesse, et lequel élabore des spécifications de valeur de consigne pour les systèmes actionneurs spécifique (70, 72, 74, 76, 78, 80, 82, 84, 100, 102, 104), comme le moteur électrique (80, 82) et des actionneurs de braquage (72), sous la forme de messages par l'intermédiaire d'un bus système (40), alors que les résultats de calcul des différents modules de fonction (26, 28, 30, 32, 35, 36) sont échangés pour améliorer le comportement en temps réel de l'ensemble du système de façon interne au processeur et sont ajustés entre eux.

2. Système d'entraînement selon la revendication 1, **caractérisé en ce que** le calculateur industriel (24) contient au moins un module de braquage (35) pour la mise en forme des signaux électriques à haute priorité d'au moins un élément de commande de braquage (19) et au moins un module de freinage (36) travaillant de façon parallèle et autonome par rapport au module de braquage (35) pour la mise en forme de signaux de freinage électriques à haute priorité d'au moins un élément de commande (20) pour la fonction de conduite freinage.

3. Système d'entraînement selon la revendication 1 ou 2, **caractérisé en ce que** le calculateur industriel (24) contient un module de braquage (35) travaillant de façon autonome avec une mémoire de diagrammes caractéristiques d'angle de braquage, sur la base de laquelle des données de correction pour chaque roue (88, 90) sont attribuées aux signaux d'un élément de commande de braquage (19) en tenant compte des conditions d'Ackermann ou similaires, qui sont amenées de façon interne au processeur au moins à un autre module de fonction (30, 36) travaillant de façon autonome, qui met à disposition des informations codées en messages pour les entraînements de roue et/ou les freins (78, 84).

4. Système d'entraînement selon l'une quelconque des revendications 1 à 3, **caractérisé en ce que** le calculateur industriel (24) contient un module de braquage (35) fonctionnant de façon autonome, qui traite en priorité des spécifications d'un élément de commande de braquage (19), mais accepte en seconde priorité de façon directe également des spécifications de systèmes de commande automatiques de braquage et/ou indirectement de séquences de braquage de spécifications de planification mémorisées, moyennant quoi les modes de service système de commande de braquage et/ou séquences de braquage doivent être présélectionnés par un terminal (22) ou pouvant être réactivés après déconnexion en raison d'une intervention du conducteur.

5. Système d'entraînement selon l'une quelconque des revendications 1 à 4, **caractérisé en ce que** le calculateur industriel (24) contient un module de braquage (35) travaillant de façon autonome avec une mémoire de diagrammes caractéristiques et reçoit des signaux de commande d'un élément de commande de braquage (19) et des valeurs réelles d'un capteur de vitesse de véhicule et **en ce que** la mémoire de diagrammes caractéristiques attribue aux signaux de commande en fonction de barrières prédéfinissables de la vitesse du véhicule des spécifications de valeurs théoriques d'angle de braquage pour le au moins un essieu directeur.

6. Système d'entraînement selon l'une quelconque des revendications 1 à 5, **caractérisé en ce que** le calculateur industriel (24) présente un module de boîte de vitesse (30) fonctionnant de façon autonome pour les mises en forme des signaux à faible priorité d'au moins un actionneur de boîte de vitesses (14), qui comprend éventuellement une mémoire de diagrammes caractéristiques de vitesse, le module de boîte de vitesse (30) calculant des valeurs de régime pour les différents moteurs électriques (80, 82) et les envoie sous la forme de messages par le bus système (40) à des contrôleurs de moteurs électriques (60, 62), qui sont attribués aux différents moteurs électriques (80, 82), et transmet de façon interne au processeur également des données de correction à au moins un autre module de fonction travaillant de façon autonome (35).

7. Système d'entraînement selon l'une quelconque des revendications 1 à 6, **caractérisé en ce que** le calculateur industriel (24) contient un module de boîte de vitesses (30) travaillant de façon autonome, qui détermine des vitesses théoriques à partir de signaux de commande de vitesse prédéfinissables par l'actionneur de boîte de vitesses (14) et à partir des vitesses de véhicule renvoyées par le bus système (40) et les intègre avec des facteurs de régime, qui sont formés à partir des données de correction dépendantes de l'angle de braquage d'un module de braquage (35) et sont attribués aux différentes roues (88, 90), afin de calculer des spécifications de valeurs théoriques de régime au niveau de la grandeur et de la direction pour les entraînements individuels et les transmet sous la forme de messages par l'intermédiaire du bus système (40) aux différents contrôleurs de moteurs électriques (60, 62).

8. Système d'entraînement selon l'une quelconque des revendications 1 à 7, **caractérisé en ce que** le module de boîte de vitesses (30) est en liaison avec un dispositif de spécification de vitesse qui peut être actionné par l'utilisateur, qui permet de prédéfinir les vitesses maximales souhaitées de véhicule, et avec un capteur de vitesse de véhicule et **en ce que** le module de boîte de vitesse (30) réduit les spécifications de valeurs prescrites de régime éditées par le bus système (40) lorsque la vitesse maximale souhaitée et réglée du véhicule est atteinte, afin d'éviter un dépassement de la vitesse maximale souhaitée du véhicule.

9. Système d'entraînement selon l'une quelconque des revendications 1 à 8, **caractérisé en ce qu'**à chaque moteur électrique (80, 82) est attribué un contrôleur de moteur électrique (60, 62), qui règle les régimes prescrits, transmis comme spécifications de valeurs théoriques par le bus système (40), par l'élévation ou l'abaissement des couples ou de la puissance en tenant compte des conditions de charge et/ou d'adhérence qui prédominent sur la roue concernée (88, 90).

10. Système d'entraînement selon l'une quelconque des revendications 1 à 9, **caractérisé en ce que** le calculateur industriel (24) contient un module de moteur à combustion (28) travaillant de façon autonome qui met à disposition, à partir des régimes prescrits prédéfinis par l'utilisateur et/ou mis à disposition de façon interne au processeur, des spécifications de valeurs de consigne pour un contrôleur de moteur à combustion (54) pour le réglage de la pompe à injection de carburant, qui sont éditées au moyen du bus système (40).

11. Système d'entraînement selon la revendication 10, **caractérisé en ce que** le module de moteur à combustion contient des diagrammes caractéristiques de moteurs pour le moteur à combustion (74) et/ou des diagrammes caractéristiques de générateur pour le générateur (76) et **en ce que**, dans le module de moteur à combustion (28), des spécifications de valeurs de consigne de quantité d'injection pour le contrôleur du moteur à combustion (54) sont calculées et optimisées à partir de la vitesse théorique, du besoin en puissance du véhicule et les diagrammes caractéristiques de telle façon qu'on obtienne des rendements globaux favorables du système d'entraînement.

12. Système d'entraînement selon l'une quelconque des revendications 1 à 11, **caractérisé en ce qu'**il est prévu une prise de force (96) pouvant être entraînée par le moteur à combustion (74) et **en ce qu'**un module de moteur à combustion (28) est en liaison avec un système de spécification (12) réglable par un utilisateur et envoie la valeur prescrite du régime moteur au contrôleur de moteur à combustion (28) lorsque le mode prise de force est connecté.

13. Système d'entraînement selon l'une quelconque des revendications 1 à 12, **caractérisé en ce qu'**il est prévu un actionneur d'embrayage (16) pouvant être commandé par l'utilisateur, qui envoie des signaux électriques à un module d'embrayage (32) inclus dans le calculateur industriel (24) et travaillant de façon autonome, **en ce qu'**au moins un modèle d'un véhicule roulant par inertie est mémorisé dans le calculateur industriel (24) et **en ce que** le module d'embrayage (32) envoie un ordre à un module de boîte de vitesse (30) de façon interne au processeur et dans une première, phase de commande, en cas de commande de l'actionneur d'embrayage (16), afin de générer la vitesse du véhicule en fonction du modèle mémorisé du véhicule roulant par inertie et de l'envoyer comme spécification de valeur théorique pour un contrôleur de boîte de vitesses (110) au bus système (40).

14. Système d'entraînement selon l'une quelconque des revendications 1 à 13, **caractérisé en ce que** le moteur à combustion (74) entraîne un arbre d'entraînement (106) directement ou indirectement au moyen d'une transmission (104) et **en ce qu'**à chaque roue (88, 90) d'au moins un essieu d'entraînement est attribuée une boîte de vitesse cumulée (100), qui combine la puissance de sortie de l'arbre d'entraînement (106) et celle du moteur électrique (80, 82) spécifique et l'envoie à la roue (88, 90).

15. Système d'entraînement selon la revendication 14, **caractérisé en ce qu'**il est prévu un actionneur d'embrayage (16) pouvant être commandé par l'utilisateur et au moins un embrayage (102) dans la branche d'entraînement mécanique, l'actionneur d'embrayage (16) envoyant des signaux électriques à un module d'embrayage (32) inclus dans le calculateur industriel (24) et travaillant de façon autonome, **en ce que** le module d'embrayage (32) transmet d'une part des informations à un contrôleur d'embrayage (108) lors d'une commande de l'actionneur d'embrayage (16) pour l'ouverture de l'embrayage (102) par le système bus (40), afin de lui demander d'ouvrir un broyage (102) et d'interrompre le flux de puissance de la branche d'entraînement mécanique, et d'autre part transmet éventuellement de façon interne au processeur des spécifications à un contrôleur de boîte de vitesse (110, 112), afin de lui demander d'entraîner l'embrayage (102) de façon synchrone pour qu'il puisse être refermé à tout moment.

16. Système d'entraînement selon la revendication 14 ou 15, **caractérisé en ce qu'**il est prévu un actionneur de renversement de marche (18) pouvant être commandé par l'utilisateur pour générer des signaux de renversement de marche et un embrayage de renversement de marche dans la branche d'entraînement mécanique, **en ce que** l'actionneur de renversement de marche (18) envoie des signaux électriques à un module de renversement de marche (34) contenu dans le calculateur industriel (24) et travaillant de façon autonome et **en ce que** dans le calculateur industriel (24) sont mémorisées des séquences de traitement pour l'exécution de l'opération de renversement de marche, qui peuvent être appelées en fonction de la position de l'actionneur de renversement de marche (18), afin de transmettre, pour l'exécution de la manoeuvre de renversement de marche, des signaux appropriés de façon interne au processeur à d'autres modules de fonction (28, 30, 32, 36) et d'envoyer des informations appropriées sous la forme de message au bus système (40).

17. Système d'entraînement selon la revendication 16, **caractérisé en ce que** le mode de renversement de marche (34) active lors de la génération d'un signal de renversement de marche approprié un algorithme de commande, qui contient un programme ou un schéma pour réduire les régimes des moteurs électriques (80, 82) et envoie de façon interne au processeur des résultats de calcul pour la réduction des régimes à un module de boîte de vitesse (30) et **en ce que** le module de renversement de marche (34) envoie des informations codées en message pour l'ouverture de l'embrayage de renversement de marche par le bus système (40) à un contrôleur d'embrayage de renversement de marche en cas de sous dépassement d'une valeur de vitesse définie.

18. Système d'entraînement selon l'une quelconque des revendications 1 à 17, **caractérisé en ce qu'**il est prévu un actionneur de freinage (20) pouvant être commandé par l'utilisateur, qui envoie des signaux de freinage électriques, en fonction de sa position de commande, à un module de freinage (36) inclus dans la calculateur industriel (24) et travaillant de façon autonome, moyennant quoi le module de freinage (36) transmet par le bus système (40) des spécifications de valeur de consigne au moins à un contrôleur de freinage (58, 64), afin de contrôler au moins un actionneur de freinage (78, 84) en fonction du signal de freinage en cas de dépassement d'un signal de freinage prédéfinissable.

19. Système d'entraînement selon la revendication 18, **caractérisé en ce que** le module de freinage (36) analyse la part de retard prédéfinie par l'actionneur de freinage (20) et transmet de façon interne au processeur des données de correction au moins à un module de boîte de vitesse (30) travaillant de façon autonome, qui détermine les valeurs de régime pour les différents moteurs électriques (80, 82) ou les corrige et les envoie via le bus système(40) aux contrôleurs de moteur électrique (60, 62), qui sont attribués aux moteurs électriques (80, 82).

20. Système d'entraînement selon la revendication 18 ou 19, **caractérisé en ce que**, en cas de dépassement d'un signal de freinage prédéfinissable, le module de freinage (36) assume le rôle prépondérant d'un module de boîte de vitesses (30), et à partir de la vitesse souhaitée prédéfinie par l'actionneur de freinage (20) et à partir de la vitesse réelle du véhicule renvoyée par le bus système (40), calcule des régimes théoriques et les envoie comme spécifications de valeurs théoriques pour les contrôleurs de freinage (58, 64) au bus système (40).

21. Système d'entraînement selon la revendication 20, **caractérisé en ce que** le calculateur industriel (24) contient une mémoire de diagrammes caractéristiques, dans laquelle les facteurs de régime sont attribués aux données de correction transmises par un module de braquage (35) et dépendantes de l'angle de braquage, facteurs par lesquels les vitesses prescrites momentanées pour les freins de roues indépendantes (78, 84) sont corrigées, afin de les adapter aux angles de braquage actuels.

22. Système d'entraînement selon l'une quelconque des revendications 18 à 21, **caractérisé en ce que**, en cas de dépassement d'un signal de freinage prédéfinissable, les contrôleurs de freinage (58, 64) assument le rôle prépondérant des contrôleurs de moteurs électriques (60, 62) et/ou d'au moins un contrôleur de boîte de vitesses (110) et règlent les régimes de roue en fonction des conditions de glissement et de la charge de roues (88, 90) de façon à obtenir les vitesses exigées par l'actionneur de freinage (20).

23. Système d'entraînement selon l'une quelconque des revendications 18 à 22, **caractérisé en ce qu'**il est prévu dans la partie mécanique de la branche d'entraînement un embrayage (102) pouvant être amorcé par un contrôleur d'embrayage (108) et **en ce que** le module de freinage (36) transmet, en cas de dépassement d'un signal de freinage prédéfinissable, d'une part à un module d'embrayage (32), qui est en liaison par le bus système (40) avec un contrôleur d'embrayage (108), de façon interne au processeur les informations pour l'ouverture de l'embrayage (102), et transmet d'autre part la conduite du procédé au module de freinage (36) et/ou aux contrôleurs de freinage (58, 64).

24. Système d'entraînement selon l'une quelconque des revendications 18 à 23, **caractérisé en ce qu'**il est prévu au moins un embrayage (102) dans la partie mécanique de la branche d'entraînement et **en ce que**, en cas de dépassement d'un signal de freinage prédéfinissable, le module de freinage (36) envoie de façon interne au processeur à un module d'embrayage (32) des informations pour l'ouverture de l'embrayage (102) et donne l'ordre à un module de boîte de vitesses (30) d'envoyer les informations codées en messages par le bus système (40) à des contrôleurs d'entraînement, afin de les amorcer de telle sorte que l'embrayage (102) est entraîné de façon synchrone et peut être refermé à tout moment.

25. Système d'entraînement selon l'une quelconque des revendications 18 à 24, **caractérisé en ce que** la vitesse obtenue lors de la désactivation de l'actionneur de freinage (20) est mémorisée par un module de boîte de vitesse (30) comme nouvelle vitesse souhaitée.

26. Système d'entraînement selon l'une quelconque des revendications 1 à 25, **caractérisé en ce qu'**un terminal (22) est raccordé au calculateur industriel (24) pour l'entrée et la sortie d'informations, d'instructions de données et de commande, et similaires.

27. Système d'entraînement selon l'une quelconque des revendications 1 à 26, **caractérisé en ce que** le calculateur industriel (24) contient au moins une mémoire de séquence (38), dans laquelle on peut mémoriser les séquences de travail prédéfinissables pour les systèmes actionneurs (70, 72, 74, 76, 78, 80, 82, 84, 100, 102, 104) et qui, en cas d'activation d'un mode de séquence, transmet de façon interne au processeur des informations aux modules de fonction concernés (26, 28, 30, 32, 34, 35, 36), afin d'élaborer la séquence de travail.

28. Système d'entraînement selon l'une quelconque des revendications 1 à 27, **caractérisé en ce que** le bus système (40) est conçu comme un CAN-Bus et contient au moins deux câbles de bus indépendants et redondants et **en ce qu'**il est prévu une batterie supplémentaire indépendante de la batterie du véhicule, qui alimente le calculateur industriel et le bus système (40) redondant au moins en cas de défaillance de l'alimentation électrique du véhicule.

29. Système d'entraînement selon l'une quelconque des revendications 1 à 28, **caractérisé en ce que** le calculateur industriel (24) comprend au moins un module d'appareils (26) travaillant en autonomie, qui calcule des signaux de commande prédéfinis par un utilisateur et/ou obtenus par une mémoire de séquence (38) et qui émet par l'intermédiaire du bus-système (40) des spécifications de valeurs théoriques à au moins un contrôleur d'appareils (50).
